# NOUVEAU FASCICULE DE BREVET EUROPEEN

(11) **EP 1 685 637 B2**
(45) Date de publication et mention de la décision concernant l'opposition: **30.08.2023**
(45) Mention de la délivrance du brevet: 17.08.2016
(21) Numéro de dépôt: 04805491.0
(22) Date de dépôt: 19.11.2004
(51) Int. Cl.: H02J 7/00

(54) **ENSEMBLE OUTIL ÉLECTRIQUE PORTATIF AUTONOME DE PUISSANCE**
STROMAUTONOMER TRAGBARER ELEKTROWERKZEUGSATZ
POWER AUTONOMOUS PORTABLE ELECTRIC TOOL SET

(30) Priorité: 20.11.2003 FR 0313608
(43) Date de publication de la demande: 02.08.2006
(73) Titulaire: PELLENC (Société Anonyme), 84120 Pertuis (FR)
(72) Inventeur: PELLENC, Roger, F-84120 Pertuis (FR)
(74) Mandataire: Cabinet Nuss
(86) Numéro de dépôt international: PCT/FR2004/002954
(87) Numéro de publication internationale: WO 2005/053131

(56) Documents cités:
- EP-A- 0 291 131
- EP-A- 0 310 717
- EP-A- 1 217 710
- EP-A1- 0 920 062
- EP-A2- 1 363 379
- EP-B1- 1 109 237
- WO-A1-97/32383
- WO-A1-98/47404
- WO-A1-99/50946
- WO-A2-01/39351
- DE-A1- 10 110 642
- DE-A1- 10 354 871
- DE-A1- 19 945 994
- FR-A1- 2 744 852
- KR-A- 20030 062 549
- US-A- 5 111 681
- US-A- 5 680 026
- US-A- 5 773 159
- US-A- 5 898 294
- US-A- 5 929 597
- US-A- 6 091 224
- US-A1- 2001 052 758
- US-A1- 2002 145 406
- US-A1- 2003 096 158
- US-B1- 6 242 893
- US-B1- 6 254 832
- US-B1- 6 268 710
- US-B1- 6 268 713
- US-B1- 6 324 339
- US-B1- 6 373 152
- US-B1- 6 441 589
- COLLIN A. VINCENT et al.: "RECHARGEABLE LITHIUM CELLS" In: VINCENT C A ET AL: "MODERN BATTERIES, An Introduction to electrochemical Power Sources", 1997 ISBN: 0 340 66278 6 pages 199,222-231-311-315,
- "Designing a New Generalized Battery Management System", IEEE Transactions on Industrial Electronics, vol. 50, no. 5, 5 October 2003 (2003-10-05), pages 990-999,
- "BL600 Lithium-Ion Fast Charger", Ault, 2002, pages 1-2,
- Lain M j et al: "Dealing with In-Flight Lithium Battery Fires in Portable Electronics Devices", www.caa.co.ok, 30 July 2003 (2003-07-30), pages 1-38,
- "l'accumulateur lithium Ion", Wikipedia, 4 May 2017 (2017-05-04), pages 1-3,
- "Accumulateurs alcalins et autres accumulateurs à électrolyte non acide ?Exigences de sécurité pour les accumulateurs portables étanches, et pour les batteries qui en sont constituées, destinés à l'utilisation dans des applications portables", Norme international CEI 62133, October 2000 (2000-10), pages 1-7,

## Description

La présente invention concerne le domaine des appareils et instruments à sources d'énergie autonomes, plus particulièrement les outils électroportatifs de puissance autonomes, et a pour objet un ensemble outil du type précité à batterie lithium-ion ou lithium polymère.

Dans la présente, on entend par "outil" de manière générale un appareil ou instrument apte à faciliter l'action physique d'un opérateur dans l'exécution d'une tâche matérielle ou à exécuter ladite tâche sous le contrôle de l'opérateur. Par "ensemble outil" , on entend un outil avec sa source d'énergie électrique et rechargeable autonome et le moyen d'alimentation de cette dernière.

On peut citer comme outils déjà réalisés par la déposante : les sécateurs électroniques pour la taille des arbres fruitiers et de la vigne, les attacheurs de végétaux et les outils de récolte de fruits.

Peuvent également être cités, de façon non limitative, à titre d'outils du genre précité et réalisés suivant des technologies similaires : les scies, les tondeuses à gazon, les débrousailleuses, les coupes haies, les clefs à chocs, les marteaux piqueurs.

Ces ensembles outils électroportatifs de puissance se distinguent essentiellement des outils comparables actionnés par des sources d'énergie hydraulique, pneumatique ou électrique par le fait qu'ils sont autonomes et indépendants de toute source d'énergie extérieure, ce qui permet à l'opérateur d'être entièrement libre de ses mouvements. Ils se distinguent aussi des outils portatifs autonomes actionnés par moteur thermique, par l'absence de pollution, de mauvaises odeurs, de vibrations et de bruit durant leur fonctionnement et par leur fiabilité d'utilisation.

Il est démontré d'autre part que l'usage de ces ensembles outils engendre un confort d'utilisation sans précédent, de par leur fonctionnement silencieux et leur souplesse.

De tels ensembles outils électriques portatifs autonomes de puissance comprennent généralement au moins trois sous-ensembles fonctionnels distincts, à savoir un premier sous-ensemble formant actionneur électrique et générant l'action mécanique de l'outil, un deuxième sous-ensemble formant source d'énergie électrique et comprenant essentiellement une batterie électrochimique rechargeable et un troisième sous-ensemble formant chargeur apte à effectuer la recharge de la batterie.

Un tel ensemble est montré par le document EP 291131.

L'avènement et le développement de ces ensembles outils sont principalement liés à deux facteurs techniques :
- d'une part, l'arrivée sur le marché de nouveaux types de batterie ayant un meilleur rapport capacité/poids,
- d'autre part, le développement des technologies des moteurs électriques à très haut rendement.

Les batteries actuellement utilisées sur les ensembles outils cités en exemple sont du type nickel cadmium ou du type nickel métal hydrure. Elles ont une capacité énergétique d'environ 30 à 50 Wattheures par kilo.

Sachant qu'un opérateur a, en accord notamment avec les recommandations officielles, une capacité de portage sur le dos, en bandoulière ou à la ceinture, de 4 kg maximum pour un travail continu à la journée, on en déduit qu'avec les techniques actuelles nickel cadmium et nickel métal hydrure, la capacité totale de la batterie portée par l'opérateur sera comprise entre 120 et 200 Wattheures.

Cette capacité n'est pas toujours suffisante pour procurer aux ensembles outils électroportatifs autonomes de puissance, l'énergie nécessaire pour travailler une demi-journée, ni a fortiori une journée continue.

Il existe donc un besoin et une demande effective pour des batteries ayant un rapport capacité/poids plus performant, de façon à permettre d'étendre le champ d'application des outils électroportatifs autonomes de puissance, compte tenu de leurs avantages et qualités précités.

L'invention vise, dans ce but, à utiliser la technologie émergeante des batteries lithium-ion et lithium polymère dans le contexte des outils électroportatifs autonomes et de puissance.

En effet, bien que ces batteries soient actuellement fréquemment utilisées dans les téléphones mobiles, caméscopes et ordinateurs portables, elles ne sont pas encore utilisées dans les applications d'outils électroportatifs notamment professionnels, compte tenu des difficultés rencontrées dans leur mise en oeuvre dans les applications de forte puissance et de grande autonomie. Or, elles offrent à ce jour des rapports capacité/poids de 150 à 220 Wattheures par kilo, ce qui permettrait de tripler, voire de quadrupler la puissance ou la durée d'utilisation de ces outils électroportatifs, par rapport à leurs possibilités actuelles avec les batteries nickel cadmium ou nickel métal hydrure.

Il y a lieu de remarquer que, compte tenu de la demande en puissance, l'utilisation des batteries lithium-ion et lithium polymère dans l'application des outils électroportatifs de puissance nécessite la fourniture de tensions élevées.

En effet, les éléments lithium-ion et lithium polymère ne peuvent par nature délivrer un courant trop important et nécessitent de ce fait le couplage des éléments de base en série, de façon à obtenir des tensions élevées, permettant par ce biais la fourniture de puissances conséquentes malgré un courant limité.

Ainsi, pour la formation de batteries délivrant des puissances électriques adaptées à des applications dans les outils portatifs autonomes de puissance, tout en respectant la législation en vigueur en matière de tension d'utilisation et en fournissant des tensions de travail utiles, il y a lieu de réaliser des couplages en série de nombreux éléments ou de nombreuses cellules, chacune de ces dernières regroupant de tels éléments en parallèle.

On entend par "élément", un accumulateur d'énergie électrique individuel. Les éléments de base lithium-ion ou lithium polymère sont fabriqués industriellement suivant des formats normalisés adaptés aux applications ; ils sont produits en très grandes quantités, à des prix très compétitifs. De manière avantageuse, mais non limitative, les éléments de la batterie lithium-ion du deuxième sous-ensemble décrit dans la suite du présent exposé, sont au format commercial 18650 qui offre le meilleur rapport capacité/prix. Ces éléments sont, en règle générale, équipés de systèmes de sécurité internes qui permettent une utilisation dans des batteries de forte capacité, en toute sécurité.

Il en résulte des difficultés importantes de contrôle et/ou de gestion de telles batteries à composants multiples, qui n'ont pas été résolues à ce jour.

En effet, dans les applications citées précédemment (téléphones mobiles, caméscopes et ordinateurs portables) les batteries comportent en général au plus quatre éléments ou cellules associés en série, dont le contrôle en charge et en décharge est peu complexe et relativement aisé à mettre en oeuvre.

Le but de la présente invention est de trouver une solution au problème exposé ci-dessus.

La présente invention concerne un ensemble outil électrique portatif suivant la revendication 1.

Aux fins de description de l'invention revendiquée, il est souligné que l'on entend par "module" une unité fonctionnelle électrique, électromécanique ou électronique participant aux fonctions du deuxième sous-ensemble.

La présente invention sera mieux comprise, grâce à la description ci-après, qui se rapporte à plusieurs modes de réalisation préférés, donnés à titre d'exemples non limitatifs, et expliqués avec référence aux dessins schématiques annexés, dans lesquels :
La figure 1 est une vue en perspective d'un ensemble outil selon l'invention, sous la forme d'un sécateur, pendant une phase de charge.
La figure 2 est une vue en perspective de l'ensemble outil de la figure 1 lors d'une utilisation par un opérateur ;
La figure 3 est un schéma synoptique d'un exemple de l'outil qui ne fait pas partie de la présente invention dans lequel le premier sous-ensemble est équipé d'un dispositif de coupure automatique à tension basse minimum de son alimentation électrique venant du deuxième sous-ensemble auquel il est connecté pendant l'utilisation de l'outil.
La figure 4 est un schéma synoptique d'une caractéristique de l'invention selon laquelle le deuxième sous-ensemble est équipé d'un module de coupure automatique à tension basse minimum de l'alimentation électrique du premier sous-ensemble auquel il est connecté pendant l'utilisation de l'outil.
La figure 5 est un schéma synoptique d'une caractéristique préférée de l'invention selon laquelle le deuxième sous-ensemble est équipé d'un module de coupure automatique de la charge à tension haute maximum de son alimentation électrique, celui-ci étant connecté au troisième sous-ensemble chargeur.
La figure 6 est un schéma synoptique d'une caractéristique préférée de l'invention selon laquelle le deuxième sous-ensemble est équipé d'un module de coupure automatique de la charge à courant bas de son alimentation électrique, celui-ci étant connecté au troisième sous-ensemble chargeur.
La figure 7 est un schéma synoptique d'une caractéristique préférée de l'invention selon laquelle le troisième sous-ensemble chargeur est équipé d'un dispositif de coupure automatique de la charge à tension haute maximum de l'alimentation électrique du deuxième sous-ensemble.
La figure 8 est un schéma synoptique d'une caractéristique préférée de l'invention selon laquelle le troisième sous-ensemble chargeur est équipé d'un dispositif de coupure automatique de la charge à courant bas minimum de l'alimentation électrique du deuxième sous-ensemble.

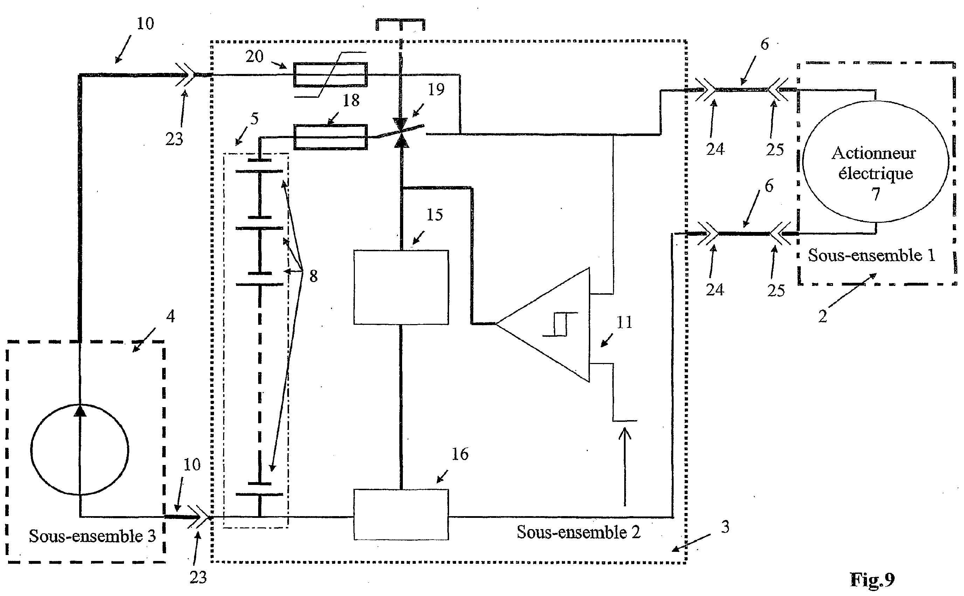

La figure 9 est un schéma synoptique de caractéristiques préférées de l'invention selon lesquelles le deuxième sous-ensemble est équipé d'un ou de plusieurs modules aptes à réaliser les fonctions suivantes : a) la coupure à tension basse minimum de l'alimentation électrique du premier sous-ensemble lorsque le premier sous-ensemble est utilisé par l'opérateur, b) la coupure automatique de la charge à tension haute maximum et c) la coupure automatique de la charge à courant bas minimum lorsque le deuxième sous-ensemble est relié au troisième sous-ensemble pendant l'opération de charge, d) la protection contre les courts circuits, e) la mise hors consommation ou très faible consommation de la batterie pendant la période de non-utilisation du premier sous-ensemble, f) l'arrêt de la charge à température excessive.
La figure 10 est un schéma synoptique du second sous-ensemble fonctionnel faisant partie de l'ensemble outil.
La figure 11 est un schéma électronique de principe de certains éléments constitutifs du second sous-ensemble représenté sur la figure 10.
La figure 12 est l'algorythme schématique d'une méthode de charge particulièrement performante.

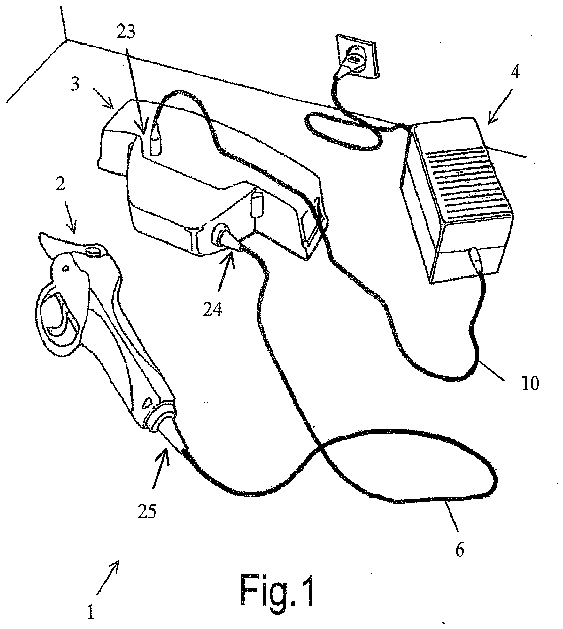

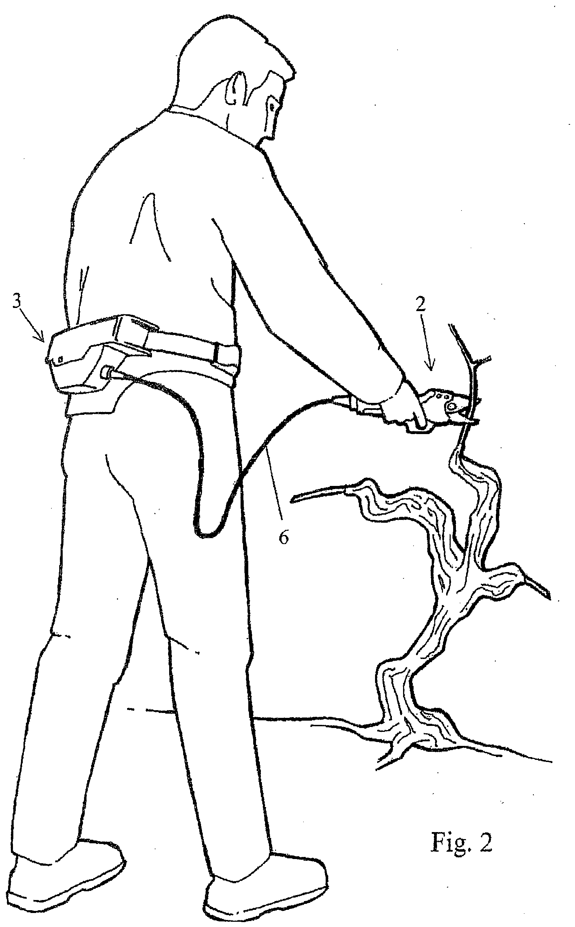

Comme le montrent les figures 1, et 2, l'ensemble outil électrique portatif autonome de puissance 1 comprend au moins trois sous-ensembles fonctionnels distincts 2, 3 et 4, à savoir un premier sous-ensemble 2 formant actionneur électrique et générant l'action mécanique de l'outil, un deuxième sous-ensemble 3 formant source d'énergie électrique et comprenant essentiellement une batterie électrochimique lithium-ion ou lithium polymère rechargeable 5 et un troisième sous-ensemble 4 formant chargeur apte à effectuer la recharge de la batterie 5.

Le premier sous-ensemble 2 est, d'une part relié au moins pendant l'utilisation de l'outil au deuxième sous-ensemble 3 par un cordon électrique souple 6 et, d'autre part, il est pourvu d'un système de coupure permettant la coupure de l'alimentation électrique de l'actionneur 7 qui le constitue, automatiquement et/ou à volonté par l'opérateur.

L'actionneur électrique du premier sous-ensemble 2 peut être, par exemple, constitué par un moteur électrique à courant continu avec balais, ou par un moteur électrique synchrone triphasé sans balais, avec capteurs de position, ou par un moteur synchrone triphasé sans balais ni capteurs de position.

Le deuxième sous-ensemble 3 est portable par l'opérateur et il est constitué, d'une part, par une batterie électrochimique 5 lithium-ion ou lithium polymère formée par association de cellules 8 en série, chaque cellule étant composée d'un élément ou de plusieurs éléments 9 associés en parallèle et, d'autre part, d'un ou de plusieurs modules électriques ou électroniques de contrôle et/ou de gestion de la batterie, ces modules sont situés à proximité de la dite batterie. Ils sont, par exemple, fixés sur le support de la batterie et à l'intérieur du boîtier enveloppant le deuxième sous-ensemble 3. Ils peuvent être aussi intégrés directement dans le boîtier du deuxième sous-ensemble 3, par exemple par coincement.

En situant le ou les modules à proximité immédiate de la batterie 5, les connexions et le câblage sont rendus plus aisés et moins fragiles et les signaux de mesure et de commande moins exposés à des perturbations, des pertes ou des parasites et moins soumis à des dérives, du fait d'une distance de transmission réduite.

Selon des modes intéressants de mise en oeuvre :
- un module parmi le ou les modules électriques ou électroniques de contrôle et/ou de gestion de la batterie équipant le deuxième sous-ensemble est configuré pour la fonction de coupure automatique de l'alimentation électrique du premier sous-ensemble lorsque la tension de la batterie à atteint un niveau bas minimum avant détérioration de la batterie lithium-ion ou lithium polymère équipant le deuxième sous-ensemble, par perte significative de capacité et augmentation de l'autodécharge ;
- un module parmi le ou les modules électriques ou électroniques de contrôle et/ou de gestion de la batterie équipant le deuxième sous-ensemble est configuré pour la fonction de coupure automatique de la charge électrique de la batterie lorsque la tension délivrée par le troisième sous-ensemble chargeur auquel il est relié a atteint une valeur maximum avant détérioration de la batterie lithium-ion ou lithium polymère équipant le deuxième sous-ensemble, par perte significative de capacité et augmentation de l'autodécharge ;
- un module parmi le ou les modules électriques ou électroniques de contrôle et/ou de gestion de la batterie équipant le deuxième sous-ensemble est configuré pour assurer la fonction de coupure automatique de la charge électrique de la batterie lorsque le courant de charge de la batterie a atteint un niveau bas minimum préconisé ou imposé par le fabricant de la batterie lithium-ion ou lithium polymère équipant le deuxième sous-ensemble.
- un module parmi le ou les modules électriques ou électroniques de contrôle et/ou de gestion de la batterie équipant le deuxième sous-ensemble est configuré pour assurer la fonction de protection de la batterie contre les courts-circuits.

Le troisième sous-ensemble chargeur 4 consiste au moins en une source d'alimentation électrique dont la tension et le courant sont adaptés à la recharge de la batterie lithium-ion ou lithium polymère 5, ce troisième sous-ensemble est relié électriquement par un cordon souple 10 déconnectable au deuxième sous-ensemble.

Le deuxième et le troisième sous-ensembles 3 et 4 peuvent se présenter sous la forme d'une unité unique intégrant les deux sous-ensembles 3 et 4, ou sous la forme de deux entités physiques distinctes, reliées électriquement, entre elles, par un cordon souple déconnectable, durant les phases de charge.

Le cordon électrique souple 6 qui relie le premier sous-ensemble 2 au deuxième sous-ensemble 3 peut être pourvu :
- d'un connecteur 24, du côté du deuxième sous-ensemble 3 ;
- ou d'un connecteur 25, du côté du premier sous-ensemble 2 ;
- ou d'un connecteur 25, du côté du premier sous-ensemble 2 et également d'un deuxième connecteur 24, du côté du deuxième sous-ensemble 3.

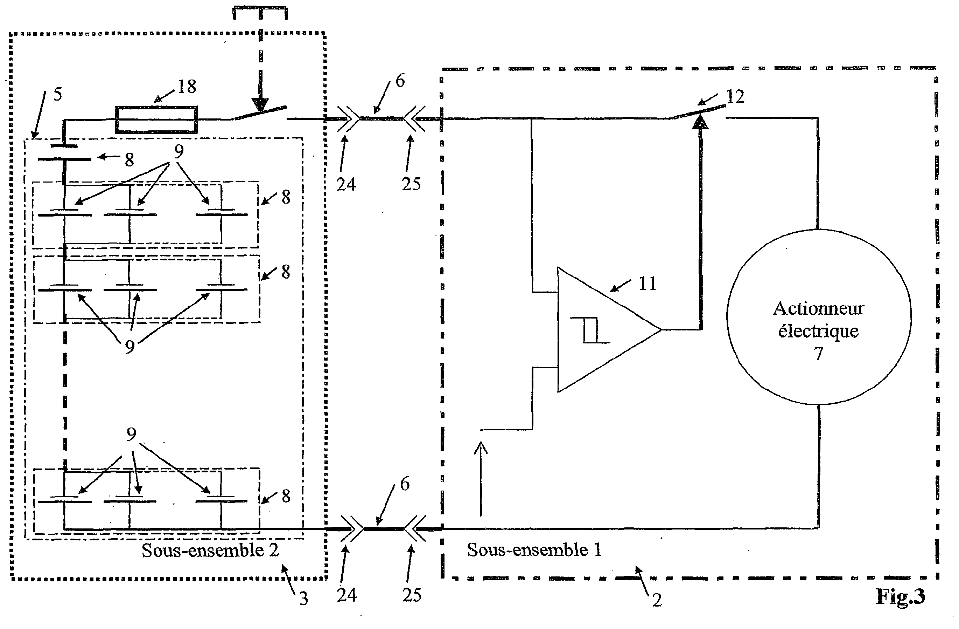

Selon un exemple qui ne fait pas partie de la présente invention (figure 3), le premier sous-ensemble 2 est équipé d'un dispositif de coupure automatique à tension basse minimum de son alimentation électrique venant du deuxième sous-ensemble 3 auquel il est connecté pendant l'utilisation de l'outil. Il est rappelé que les batteries lithium-ion ou lithium polymères ne doivent jamais être déchargées complètement, une simple décharge en dessous de la valeur de tension minimum préconisée par le fabricant conduit irrémédiablement à la détérioration de la batterie. Il est donc nécessaire d'équiper l'ensemble outil d'un dispositif de limitation de tension de décharge pour palier à cet inconvénient. La précision de cette limitation en tension minimum de décharge doit être de l'ordre de 10 %, elle est obtenue par un système électronique à base d'un comparateur de tension 11 préférentiellement à hystérésis qui compare la tension de la batterie à une tension de référence, laquelle est déterminée par la multiplication de la tension de décharge d'un élément préconisée par les fabricants d'éléments de batterie lithium-ion et lithium polymère multiplié par le nombre de cellules en série de la batterie ; ce système permet ainsi la coupure de l'alimentation électrique du premier sous-ensemble en agissant directement sur un organe de coupure par exemple un transistor Mos ou un relais 12. Ce dispositif peut se trouver directement sur le premier sous-ensemble, ce qui est le cas pour ce premier mode d'exécution, mais également sur le deuxième sous-ensemble ce qui correspond à l'exemple de réalisation suivant.

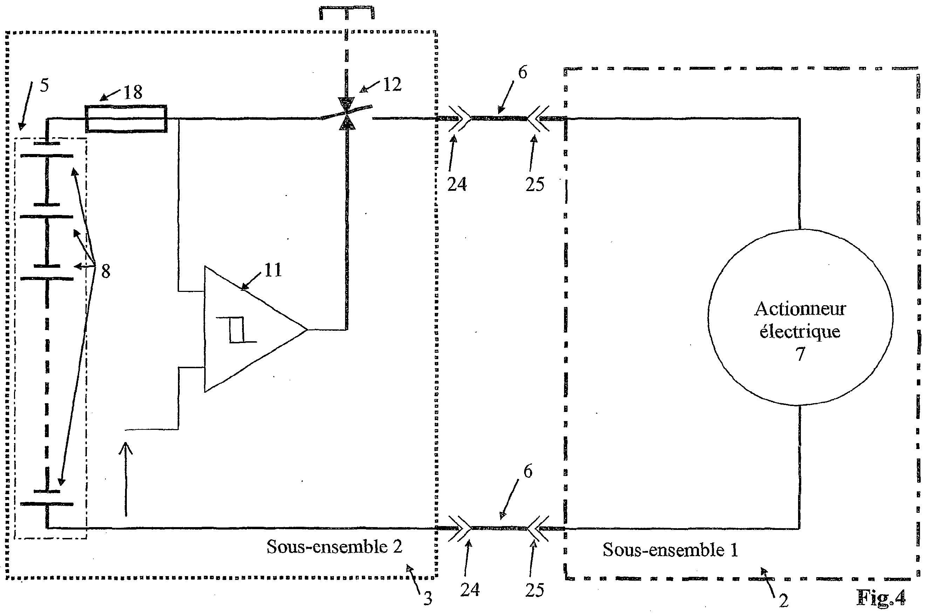

Selon une caractéristique de l'invention (figure 4), la limitation de tension de décharge de la batterie est réalisée pendant l'utilisation de l'outil par un ou des modules électriques ou électroniques de contrôle et/ou de gestion de la batterie du deuxième sous-ensemble auquel il est relié par le cordon souple 6 pendant l'utilisation de l'outil. La caractéristique est identique à celle décrite plus haut, la différence étant que le système électronique de coupure se situe sur le deuxième sous-ensemble.

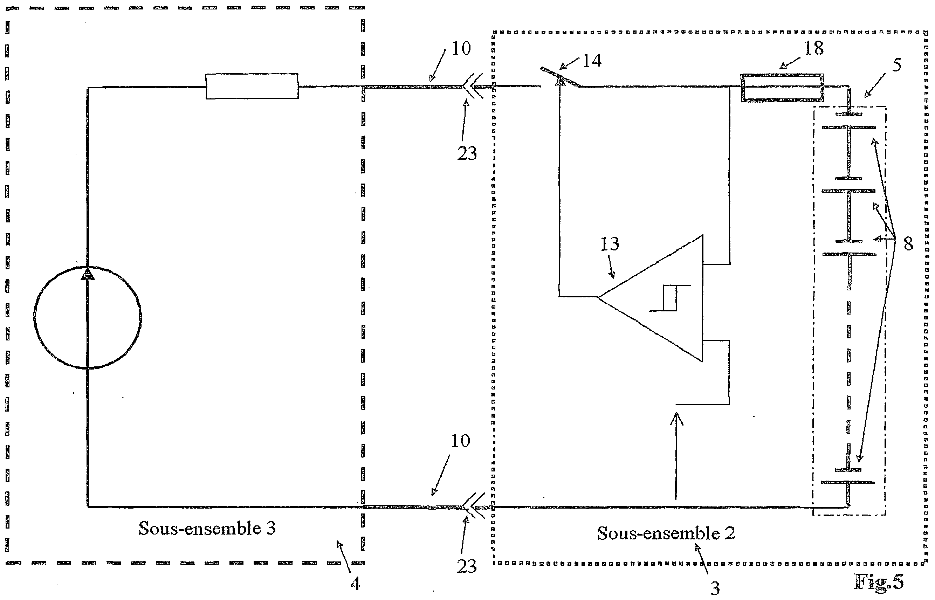

Selon une caractéristique préférée de l'invention (figure 5) le deuxième sous-ensemble est équipé d'un module de coupure automatique de la charge à tension haute maximum de son alimentation électrique, celui-ci étant connecté au troisième sous-ensemble chargeur 4. Il est rappelé que les batteries lithium-ion ou lithium polymère ne doivent jamais être chargées au-delà d'une tension maximale préconisée ou imposée par le fabricant de la batterie lithium-ion ou lithium polymère utilisée, le dépassement de cette tension de charge conduit irrémédiablement à la détérioration des éléments de la batterie. Il est donc nécessaire d'équiper l'ensemble outil d'un dispositif de limitation de tension de charge pour palier à cet inconvénient. Cette limitation en tension maximum de charge doit être très précise à au moins 1 % ; elle est obtenue par un système électronique constitué d'un comparateur de tension 13 préférentiellement à hystérésis qui compare la tension de la batterie à une tension de référence, laquelle est déterminée par la multiplication de la tension maximum de charge d'un élément préconisée par le fabricant d'éléments de batterie lithium-ion ou lithium polymère utilisée par le nombre de cellules associées en série de la batterie ; ce système permet ainsi la coupure de l'alimentation électrique de la charge du deuxième sous-ensemble en agissant directement sur un organe de coupure par exemple un transistor Mos ou un relais 14. Cette caractéristique nécessite une tension à vide du chargeur supérieure à la tension de référence. Ce dispositif peut se trouver directement sur le deuxième sous-ensemble 3, ce qui est le cas dans cette caractéristique, mais peut être également directement monté sur le troisième sous-ensemble chargeur, comme expliqué dans la suite.

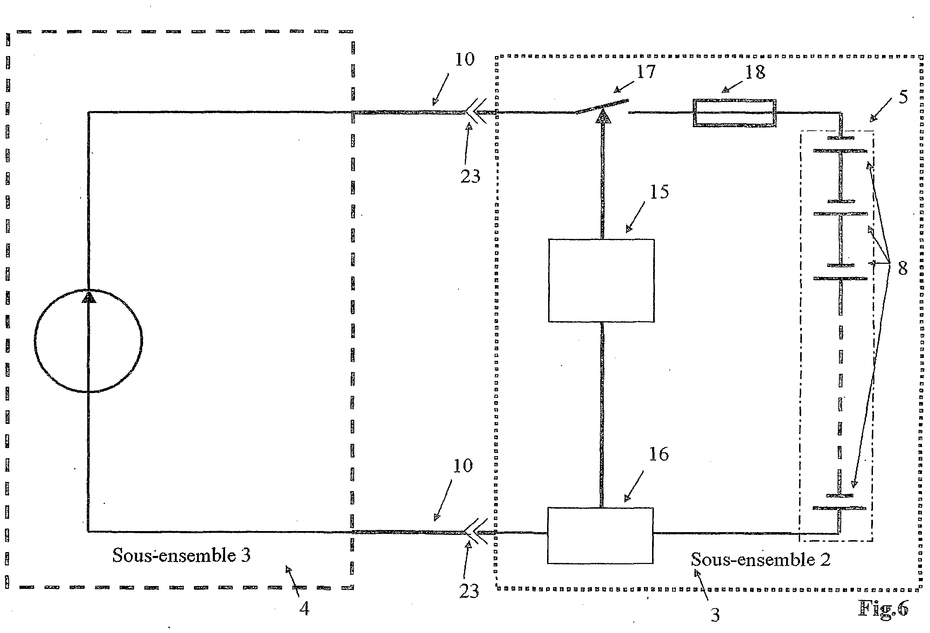

Selon une caractéristique préférée de l'invention (figure 6), le deuxième sous-ensemble est équipé d'un module de coupure automatique de son alimentation électrique à courant minimum de charge, celui-ci étant connecté au troisième sous-ensemble chargeur 4. Il est rappelé que les fabricants d'éléments de batteries lithium-ion ou lithium polymère préconisent l'arrêt de la charge pour une valeur de courant minimum ce qui a pour effet d'éviter le plaquage du lithium métallique et de rendre l'élément instable et dangereux et donc d'entraîner sa détérioration. Il est par conséquent nécessaire d'équiper l'ensemble outil d'un dispositif de limitation de charge à courant minimum. Cette limitation en courant minimum de charge est obtenue par un système électronique de comparaison de courant 15 constitué d'un comparateur de courant préférentiellement à mémoire qui compare à travers un shunt ou un capteur de courant 16, le courant de charge de la batterie à un courant de référence, lequel est déterminé par la multiplication du courant de fin de charge préconisé par le fabricant d'éléments de batterie lithium-ion ou lithium polymère utilisés multiplié par le nombre d'éléments associés en parallèles constituant les cellules de la batterie ; ce système permet ainsi la coupure de l'alimentation électrique de la charge du deuxième sous-ensemble 3 en agissant directement sur un organe de coupure par exemple un transistor Mos ou un relais 17. Pour réaliser cette fonction, ce module peut se situer directement sur le deuxième sous-ensemble, ce qui est le cas dans cette caractéristique mais peut être également directement monté sur le troisième sous-ensemble chargeur 4, comme expliqué dans une autre caractéristique exposée ci-après.

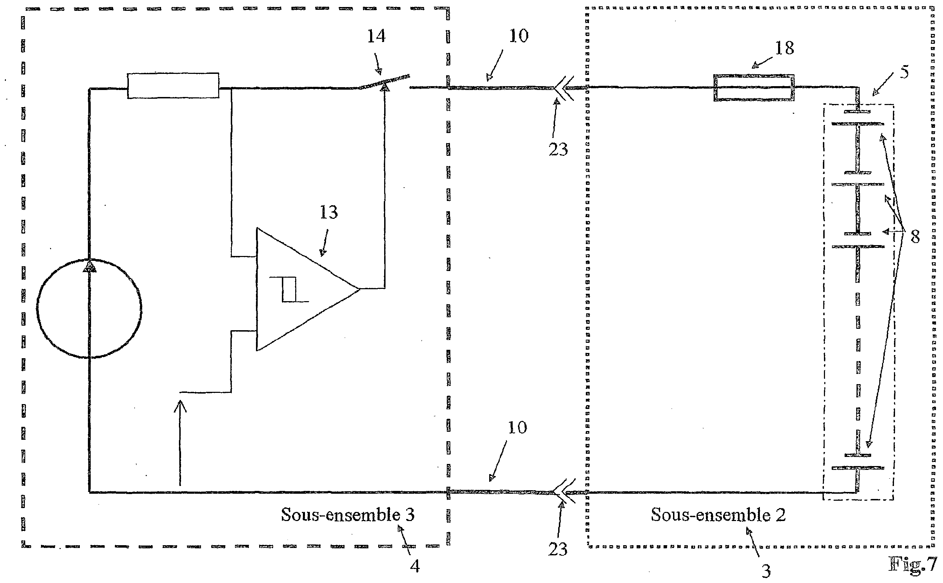

Selon une caractéristique préférée de l'invention (figure 7), c'est le troisième sous-ensemble chargeur 4 qui réalise la limitation en tension maximum de charge en coupant l'alimentation électrique du deuxième sous ensemble 3 auquel il connecté pendant l'opération de charge. Cette caractéristique est identique à celle décrite plus haut, la différence étant que le système électronique de coupure se situe sur le troisième sous-ensemble chargeur 4.

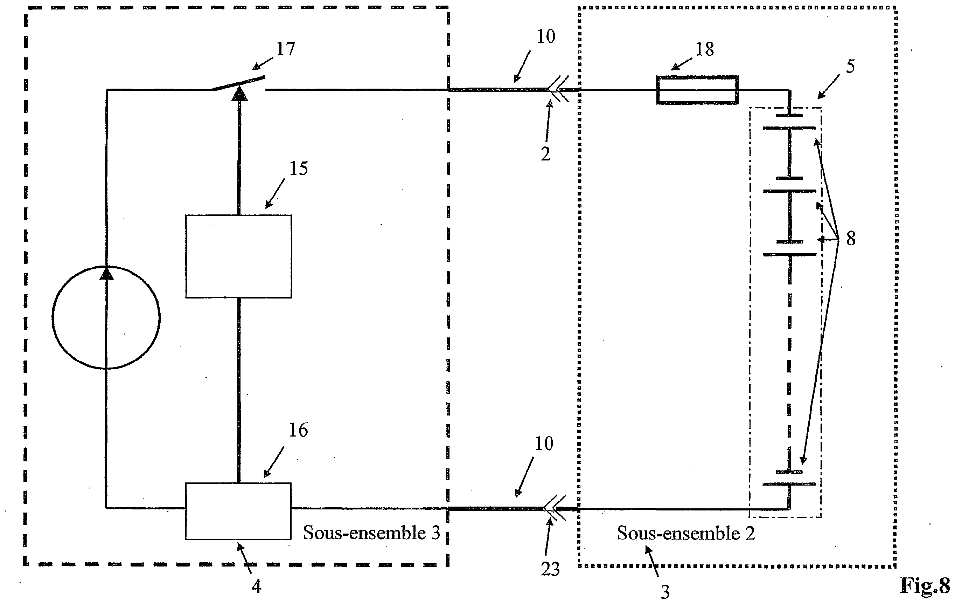

Selon une caractéristique préférée de l'invention (figure 8) c'est le troisième sous-ensemble chargeur 4 qui réalise la limitation en courant minimum de charge en coupant l'alimentation électrique du deuxième sous-ensemble 3 auquel il est connecté pendant l'opération de charge. Cette caractéristique est identique à celle décrite plus haut, la différence étant que le système électronique de coupure se situe sur le troisième sous-ensemble chargeur 4.

Ces deux dernières caractéristiques s'intègrent dans le troisième sous-ensemble chargeur 4 qui transforme l'énergie électrique alternative du secteur en tension et courant continus, pulsés ou redressés, adaptés à la recharge de la batterie lithium-ion ou lithium polymère, ceci lorsque le troisième sous-ensemble chargeur 4 est relié électriquement par un cordon souple au deuxième sous-ensemble 3. Le troisième sous-ensemble chargeur 4 est relié électriquement par un cordon souple déconnectable 10 au deuxième sous-ensemble 3, par exemple au moyen d'un connecteur 23.

Pour réaliser, selon des caractéristiques préférées de l'invention (figure 9), un ensemble outil opérationnel et fiable, on fera cohabiter certaines des caractéristiques décrites précédemment et ceci afin de réaliser le contrôle et/ou la gestion de la batterie en limitation de la tension de décharge et en limitation de la tension et du courant de charge. Il sera nécessaire en outre d'associer à ces limitations une protection contre les courts-circuits de la batterie qui pourraient provoquer un échauffement intempestif et conduire à un incendie de la dite batterie. Cette protection contre les courts-circuits peut être utilement réalisée par un fusible ou un disjoncteur 18 ou composant similaire monté sur au moins une borne de la batterie, avant préférentiellement toute autre connexion. Il est en outre très important que pendant les périodes de non utilisation, la batterie soit hors connexion ou très faible consommation et ceci afin d'éviter que la tension de la batterie ne descende en dessous de la tension minimum au-delà de laquelle la batterie serait détériorée. Cette fonction peut être réalisée de manière non limitative par un interrupteur 19 disposé à l'une des bornes de la batterie et, de préférence, après le fusible ou le disjoncteur 18 si ceux-ci sont installés. Les fabricants d'éléments de batteries lithium-ion et lithium polymère préconisent également que, pendant la charge et la décharge, la batterie soit protégée contre les utilisations ou les recharges en dehors de certaines plages de température. La plage de températures préconisées pour l'utilisation en décharge se situe entre -15°C et +60° et entre 0°C et 45°C pour la charge. Les risques de dépassement des seuils sont surtout sensibles pendant la charge et moins sensibles pendant la décharge. Il est donc nécessaire de protéger au minimum la batterie pendant la charge ; pour réaliser cette fonction on pourra par exemple de manière non limitative, intercaler sur une borne de la batterie à proximité du fusible, un capteur de température 20 apte à isoler électriquement la batterie lithium-ion ou lithium polymère. Il faut noter que la limitation en courant minimum de charge peut être remplacée par un système limitant la durée de charge dans le temps et ceci en fonction de la capacité des éléments, du nombre d'éléments associés en parallèle dans une cellule de la batterie et du courant maximum délivré par le chargeur.

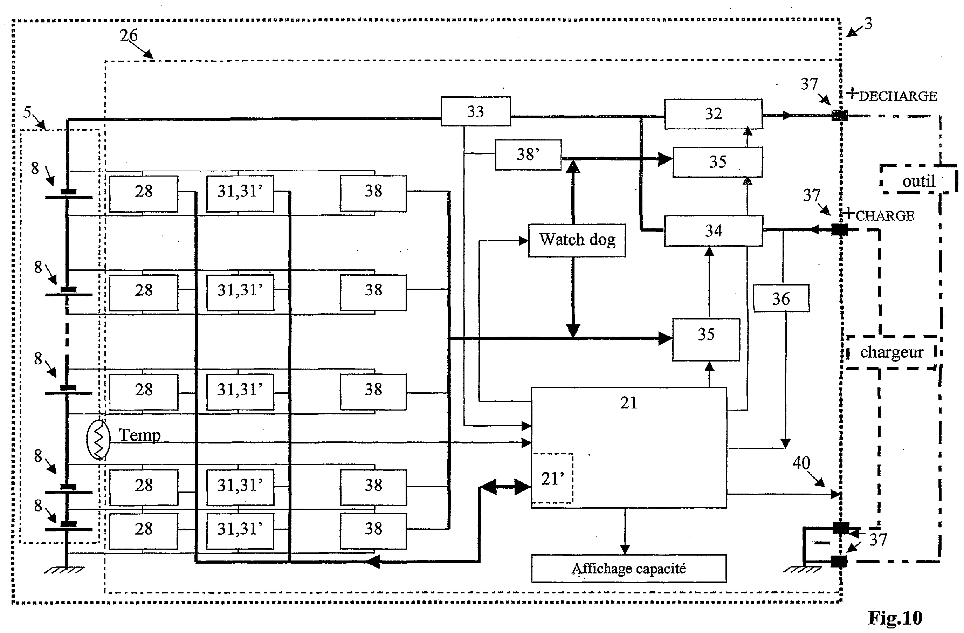

Selon un mode de réalisation (figures 10, 11, 12) non limitatif et extrêmement performant qui a permis à la déposante d'obtenir une durée de vie de plus de 1000 cycles de charge et décharge avec une perte de capacité de moins de 20 % et ceci sur plusieurs années d'essais, en toute sécurité ; sachant que les batteries lithium-ion sont connues pour leur risque d'incendie compte tenu de leur électrolyte organique et du lithium très inflammable. Selon l'invention le deuxième sous-ensemble 3 est équipé d'un seul module de contrôle et/ou de gestion de la batterie, celui-ci se présente sous la forme d'au moins une carte électronique et comprend au moins une unité de traitement numérique 21, telle que par exemple un microprocesseur, microcontrôleur, un processeur de signaux numériques, associée à une mémoire et à des circuits annexes numériques et/ou analogues.

Dans une variante, ce module est apte à remplir au moins certaines, et préférentiellement toutes les tâches suivantes :
la gestion de la charge,
la gestion de la décharge,
l'équilibrage de la charge de chaque cellule 8,
l'évaluation et l'affichage de la capacité de la batterie 5,
la protection en décharge de la batterie 5 en surintensité pendant l'utilisation de l'outil,
la gestion de l'outil durant les phases d'entreposage,
la gestion des alarmes,
la gestion et la transmission des informations recueillies,
la gestion des diagnostics.

L'exécution de ces différentes tâches est déclenchée et pilotée par l'unité de traitement numérique 21 sous la commande et le contrôle d'un programme de gestion du fonctionnement de l'ensemble outil 1, en prenant en compte les commandes de l'utilisateur et les valeurs de différents paramètres mesurées au niveau du deuxième sous-ensemble 3, ainsi qu'éventuellement au niveau du premier et/ou du troisième sous-ensemble(s) 2 et/ou 4.

En accord avec une ou plusieurs caractéristiques, et en vue de l'accomplissement des tâches de gestion de la charge, de gestion de la décharge, d'équilibrage de la charge de chaque cellule 8, d'évaluation et d'affichage de la capacité de la batterie 5, le module de contrôle et de commande 26 exploite en permanence les valeurs de mesure de la tension de chaque cellule 8 composant la batterie 5.

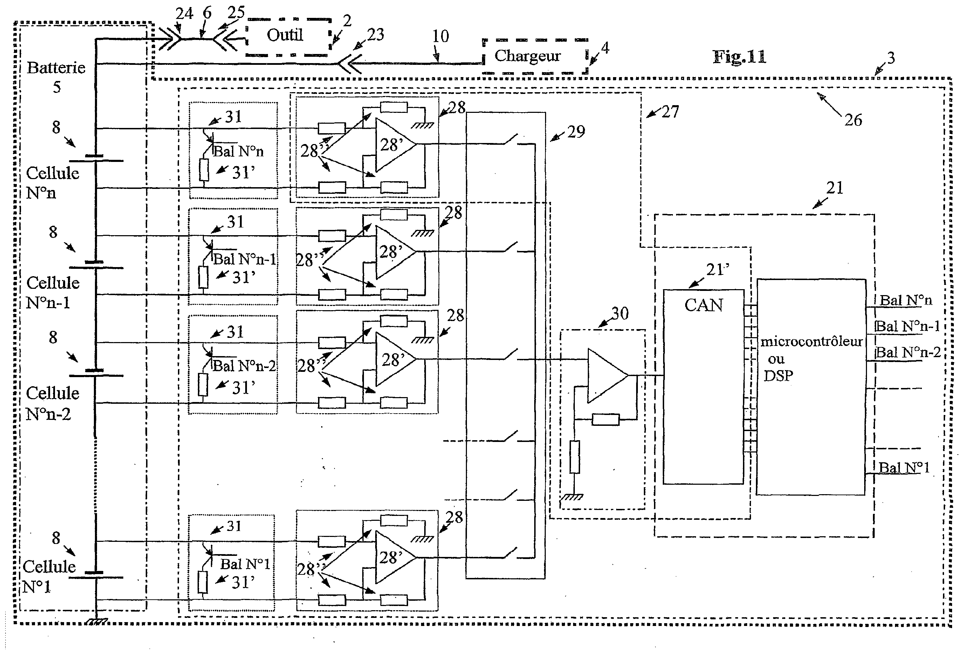

A cet effet, et comme le montrent les figures 10 et 11 des dessins annexés, pour une batterie 5 formée de n cellules 8 associées en série, les valeurs de mesure de la tension de chaque cellule 8 sont fournies par une chaîne électronique d'acquisition 27 constituée principalement de n modules analogiques 28 identiques, montés respectivement aux bornes des n cellules 8 de la batterie 5 et aptes à mesurer la tension de la cellule 8 respectivement correspondante, les valeurs de tensions mesurées par chacun des n modules 28 étant ensuite acheminées, l'une après l'autre, par l'intermédiaire d'au moins un multiplexeur analogique 29 et après amplification par un circuit adapté 30 vers un convertisseur analogique/numérique d'entrée 21' de l'unité de traitement numérique 21 faisant partie du module 26 de contrôle et/ou de gestion.

Le convertisseur 21' pourra soit être intégré à l'unité 21, soit former un circuit séparé de cette dernière.

Par l'intermédiaire de cette chaîne électronique d'acquisition 27, le module de commande et de contrôle 26 effectue une scrutation séquentielle ou cyclique des tensions des différentes cellules 8, provoquant un rafraîchissement à grande fréquence des données de tension pour chaque cellule 8 disponible au niveau de l'unité 21, permettant ainsi une prise en compte et une réaction rapides suite à l'occurrence d'une valeur de mesure de tension anormale.

Comme le montre la figure 11 des dessins annexés, les sous modules analogiques 28 de mesure de tensions réalisent respectivement pour chaque cellule 8 une soustraction entre la tension mesurée à sa borne positive et la tension mesurée à sa borne négative, ce par l'intermédiaire d'un montage électronique différentiel à amplificateur opérationnel 28' utilisant des résistances 28" ou des éléments résistifs d'entrée.

En vue d'aboutir à une sensibilité de mesure adaptée à un contrôle sûr et précis de chaque cellule 8, le montage électronique en différentiel à amplificateur opérationnel 28' de chaque sous-module de mesure de tension 28 comporte des résistances ou des éléments résistifs d'entrée 28" d'impédance proche ou supérieure à 1 Mohm, de façon à obtenir des courants de fuite très faibles et par exemple, mais non limitativement, inférieurs à 1/20000^{ème} par heure de la capacité totale de la batterie 5, les valeurs de mesure de la tension de chaque cellule 8 étant préférentiellement délivrées avec une précision de mesure d'au moins 50 mV.

De manière avantageuse, la précision de mesure de la tension souhaitée, c'est-à-dire avantageusement d'au moins 50 mV, est obtenue par étalonnage lors de la fabrication de la carte électronique du module contrôle et de gestion de la batterie 26, permettant de compenser individuellement les erreurs de mesure de tension analogique 28.

Cet étalonnage peut, par exemple, consister à introduire par programmation dans l'unité de traitement numérique 21, pour chaque module de mesure de tension 28, des paramètres correcteurs d'erreurs fonction de la mesure d'une ou de plusieurs tensions de référence très précises, que l'on substitue pour cette opération d'étalonnage aux tensions normalement mesurées aux bornes de chaque cellule 8.

Afin de permettre de délivrer à l'unité 28 un signal de mesure avec la précision requise, le convertisseur analogique/numérique 21' fournira au moins dix bits significatifs en sortie.

Conformément à une autre caractéristique, la tâche d'équilibrage de la charge des cellules 8 les unes par rapport aux autres est gérée par l'unité de traitement numérique 21 qui commande sur la base des valeurs de mesure de tension de chaque cellule 8, et si nécessaire pour chacune d'entre d'elles, l'évolution du courant de charge par l'intermédiaire de circuits dissipateurs à base de commutateurs électroniques 31 associés à des éléments résistifs 31'.

Le procédé mis en oeuvre pour réaliser une charge équilibrée de la batterie 5 peut par exemple être celui décrit dans la demande de brevet français n° 03 13570 déposée le 20 novembre 2003 par la demanderesse de la présente.

En accord avec une autre caractéristique, la tâche de gestion de la décharge consiste à scruter en permanence les données de la tension de chaque cellule 8 par l'intermédiaire de l'unité de traitement numérique 21, à interrompre la décharge lorsque celle-ci détecte qu'une de ces tensions de cellule 8 a atteint le seuil de décharge minimum préconisé par le fabricant d'éléments lithium-ion ou lithium polymère et à couper la décharge en désactivant le composant 32 de commutation de la décharge, conduisant ainsi à l'arrêt de l'outil 2 et en activant par exemple, non limitativement, un avertisseur sonore ou visuel.

Comme le montrent les figures 10 et 11 des dessins annexés, et conformément à une autre caractéristique, les tâches de gestion de la charge, d'évaluation et d'affichage de la capacité de la batterie 5 et de protection en surintensité durant la décharge sont gérées en continu par l'unité de traitement numérique 21 grâce à un circuit électronique analogique 33 de mesure du courant de charge et de décharge de la batterie 5.

Avantageusement, durant la tâche de gestion de la charge, alors que le troisième sous-ensemble formant chargeur 4 est connecté au deuxième sous-ensemble 3 au niveau de la carte électronique du module de contrôle et de commande 26 de la batterie 5, la fin de la charge est obtenue par ouverture du composant de commutation de la charge 34 qui est commandé par l'unité de traitement numérique 21 lorsque, d'une part, ladite unité 21 détecte par l'intermédiaire du circuit électronique analogique 33 de mesure du courant de charge et de décharge une chute du courant de charge jusqu'à un seuil préconisé, par exemple de 50 mA, pour la batterie 5 ou que, d'autre part, la température de la batterie 5 dépasse une valeur limite autorisée, par exemple 45°C, ou encore que la charge se prolonge pendant un temps supérieur à une fraction donnée du temps théorique de charge, par exemple environ 20 %.

En outre, la tâche d'évaluation et d'affichage de la capacité de la batterie 5 est gérée par l'unité de traitement numérique 21, cette dernière calculant ladite capacité en prenant en compte en permanence, pendant la charge et pendant l'utilisation de l'outil, d'une part, l'information du courant instantané de charge et de décharge de la batterie 5 délivrée par le circuit électronique analogique de mesure du courant de charge et décharge 33 et, d'autre part, les valeurs de mesure de tension de chaque cellule 8 et, non obligatoirement mais pour un calcul plus précis, leur résistance interne moyenne connue.

La tâche de protection en surintensité pendant la décharge de la batterie 5 lors de l'utilisation de l'outil, destinée à préserver la batterie lithium-ion ou lithium polymère d'un vieillissement prématuré ou d'un échauffement exagéré, consiste soit à couper le courant de décharge en cas de dépassement impulsionnel très important du courant maximum de décharge admis pour la batterie 5 ou de dépassement de la température maximum limite autorisée pour celle-ci, soit à limiter le courant de décharge en fonction de l'énergie consommée par l'outil pendant un certain temps glissant, sachant que la valeur de l'énergie et le temps glissant sont prédéterminés expérimentalement en fonction de l'outil, de son utilisation et de la durée de vie recherchée pour la batterie 5 lithium-ion ou lithium polymère faisant partie du second sous-ensemble 3.

En accord avec une variante de réalisation préférée, la limitation de courant de décharge est gérée par l'unité de traitement numérique 21 en appliquant une commande en modulation de largeur d'impulsion (MLI), générée soit directement par ladite unité 21, soit par un composant spécialisé, au travers d'un étage de pilotage 35, au composant de commutation de la décharge 32 réalisé par exemple sous la forme d'un composant du type Mosfet canal N.

En vue d'aboutir automatiquement à des conditions de stockage optimisées, il est prévu selon l'invention que, lorsque l'ensemble outil électrique 1 n'est pas en charge et qu'il n'a pas été utilisé pendant une durée donnée, par exemple dix jours, l'unité de traitement numérique 21 engage automatiquement une tâche de gestion de l'entreposage qui consiste à vérifier si la capacité résiduelle de la batterie 5 est supérieure ou non à la capacité de stockage préconisée par le fabricant d'éléments lithium-ion ou lithium polymère et, si la capacité résiduelle est bien supérieure à la capacité de stockage, à déclencher par l'unité de traitement numérique 21 une décharge automatique de la batterie à l'aide de circuits résistifs 31' connectés en parallèle sur chaque cellule 8, ce jusqu'à ce que la capacité de stockage soit atteinte, et dès lors à arrêter tous les circuits électroniques tout en mettant l'unité de traitement 21 en veille en mode faible consommation et, si la capacité est inférieure à la capacité de stockage à faire déclencher par l'unité de traitement numérique 21 une alarme sonore et/ou visuelle.

De manière avantageuse, l'unité de traitement numérique 21 est apte à détecter la connexion du chargeur 4 sous tension à la batterie 5 par l'intermédiaire d'une mesure de tension par le module de contrôle et de commande 26 à l'une au moins des bornes 37, préférentiellement une borne positive, du second sous-ensemble 3 destinées à être connectées audit chargeur 4.

Cette fonction, éventuellement réalisée au moyen d'un circuit de mesure 36 particulier adapté, permet, tant que l'outil est stocké en phase de non utilisation, en détectant l'instant auquel au moins une cellule 8 a atteint la tension minimum préconisée par le fabricant, de déclencher ainsi une recharge automatique de la batterie 5.

Lorsque le module de contrôle et/ou de gestion 26 détecte une tension du chargeur 4 excessive ou insuffisante au niveau des bornes de connexion 37 correspondantes du second sous-ensemble 3, l'unité de traitement numérique 21 qui exploite cette information commande l'arrêt de la charge et déclenche une alarme sonore et/ou visuelle.

On notera que la paire de bornes 37 de connexion au chargeur 4 et la paire de bornes 37 de connexion à l'outil 2 présentent une borne négative commune reliée à la masse, mais des bornes positives distinctes, à chacune desquelles est couplé un composant de commutation 32 ou 34 correspondant.

Pour faciliter le contrôle à long terme de l'utilisation de l'ensemble outil 1, ainsi que sa maintenance et la planification de son suivi technique, la tâche de gestion des informations et des diagnostics peut consister à emmagasiner dans la mémoire de l'unité de traitement numérique 21 des informations acquises pendant l'utilisation de l'outil telles que par exemple : le nombre de recharges, la comptabilisation des heures d'utilisation de l'outil, l'évolution de la capacité de la batterie 5 dans le temps, l'énergie moyenne consommée par l'outil ou analogues, ces informations pouvant être transmises par l'intermédiaire d'une liaison 40 filaire, radiofréquence ou infrarouge vers un terminal d'exploitation séparé, par exemple du type ordinateur personnel, assistant personnel électronique, GSM, pouvant éventuellement être relié au réseau Internet.

En vue d'optimiser l'intégration des moyens de commande et de contrôle de l'ensemble outil 1, le module de contrôle et/ou de gestion 26 de la batterie 5 faisant partie du second sous-ensemble 3 formant source d'énergie électrique rechargeable peut être associé à un module de contrôle et de commande électronique de l'actionneur 2 et des capteurs de ce dernier, par exemple mais non limitativement, sur la même carte électronique, le cas échéant avec utilisation de la même unité de traitement numérique 21, sachant que l'actionneur électrique du premier sous-ensemble 2 peut être, par exemple, constitué par un moteur électrique à courant continu avec balais, ou par un moteur électrique synchrone triphasé sans balais, avec capteurs de position, ou par un moteur synchrone triphasé sans balais ni capteurs de position.

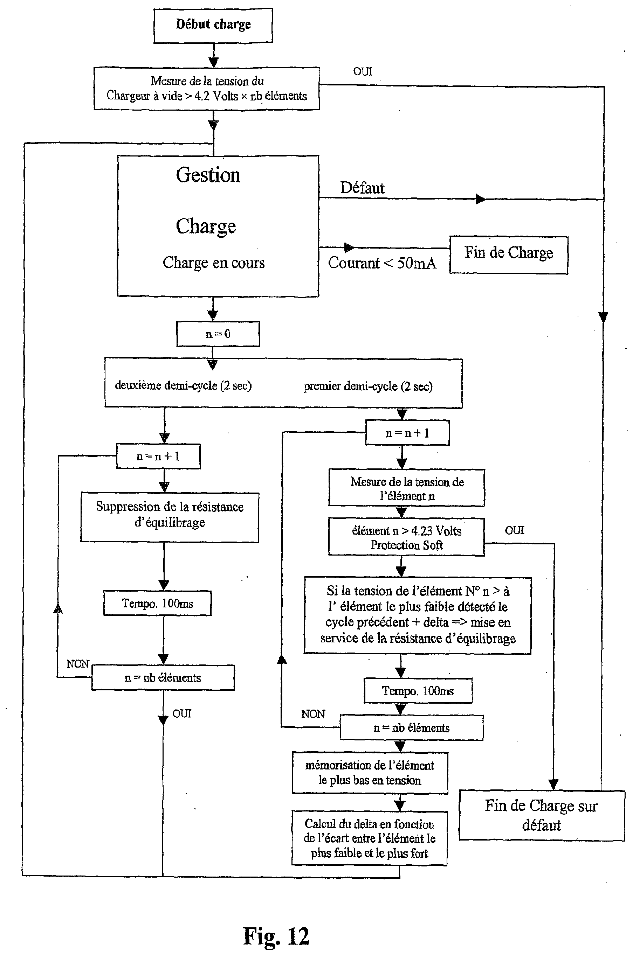

Le circuit numérique 21 comprendra également un moyen de contrôle du déroulement du programme de gestion de l'ensemble outil 1 et d'acquisition ordonnée des valeurs de mesure, représenté de manière symbolique sur la figure 12.

Afin de fournir des sécurités supplémentaires, permettant de protéger les cellules 8 de la batterie 5 dans des cas d'exposition de ces cellules à des conditions extrêmes de tension ou de courant, des circuits additionnels de coupure de la connexion du deuxième sous-ensemble 3 avec le premier ou le troisième sous-ensemble 2 ou 4 peuvent être prévus, en parallèle au système de contrôle normal précité construit autour de l'unité de traitement numérique 21.

Ainsi, le module de contrôle et de commande électronique 26 de la batterie 5 peut comporter pour chaque cellule 8 des circuits redondants de sécurité d'arrêt de charge 38, aptes à commander chacun individuellement, en cas de surtension d'une cellule 8, l'arrêt général de la charge en désactivant directement le composant 34 de commutation de la charge sans solliciter l'unité de traitement numérique 21.

De même, le module de contrôle et de commande électronique 26 peut comporter un circuit redondant d'arrêt de décharge 38', apte à commander l'arrêt de la décharge en cas de détection d'un courant de décharge égal ou supérieur à une valeur maximale admissible pour la batterie 5 par le circuit électronique analogique de mesure 33, en désactivant directement le composant 32 de commutation de la décharge sans solliciter l'unité de traitement numérique 21.

Préférentiellement, le troisième sous-ensemble 4 formant chargeur adapté à la recharge de la batterie 5 lithium-ion ou lithium polymère génère une tension avec une précision proche de 0,5 % et un courant régulé, obtenus au moyen d'un circuit spécialisé de régulation de tension et de courant. De tels circuits sont déjà connus en tant que tels et ne nécessitent pas de description supplémentaire.

Comme le montrent les figures 1 et 2 des dessins annexés, chaque sous-ensemble fonctionnel 2, 3 et 4 est monté (lorsque les sous-ensembles 3 et 4 sont distincts) dans un boîtier de protection et/ou de préhension propre, pouvant être reliés entre eux deux à deux par des câbles flexibles déconnectables 6, 10 pour le transfert d'énergie et la transmission des signaux de commande et/ou de contrôle entre lesdits sous-ensembles 2, 3, 4.

On notera que la charge de la batterie 5 peut être effectuée avec le câble 6 reliant entre eux les sous-ensembles 2 et 3 ou non.

Le boîtier renfermant le premier sous-ensemble 2 portera également l'outil et sera conformé, au niveau d'une partie ou moins, de manière ergonomique pour autoriser une préhension aisée, sure et confortable de la part de l'utilisateur.

En outre, les boutons ou organes de commande analogues, ainsi que les moyens d'affichage et d'avertissement sonore et/ou lumineux, sont préférentiellement présents en partie au niveau du boîtier du premier sous-ensemble 2 et en partie au niveau du boîtier du deuxième sous-ensemble 3, en fonction de leur type et de la nécessité de pouvoir être accessibles par l'opérateur durant l'utilisation effective de l'ensemble outil 1.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble outil électrique portatif autonome de puissance tel que par exemple sécateur, scie, outil de récolte de fruits, tondeuses à gazon, débroussailleuse, coupe haies, clef à chocs, marteau piqueur, comprenant au moins trois sous-ensembles fonctionnels distincts, à savoir un premier sous-ensemble (2) générant l'action mécanique de l'outil par l'intermédiaire d'un actionneur électrique relié, au moins pendant l'utilisation de l'outil, par un cordon électrique souple (6), à un deuxième sous-ensemble portable (3) constituant la source d'énergie électrique de l'ensemble et comprenant une batterie électrochimique rechargeable, un troisième sous-ensemble chargeur (4) relié, pendant la charge, électriquement par un cordon souple déconnectable (10) au deuxième sous-ensemble et apte à effectuer les recharges électriques de la batterie électrochimique du deuxième sous-ensemble, **caractérisé en ce que** le deuxième sous-ensemble (3) est pourvu, d'une part, d'une batterie lithium-ion ou lithium polymère formée par association de cellules en série, chaque cellule étant composée de plusieurs éléments, chaque élément étant un accumulateur d'énergie électrique individuel, et les éléments étant associés en parallèle et, d'autre part, d'un ou de plusieurs modules électriques ou électroniques de gestion de la batterie aptes à remplir la tâche de protection de la batterie en sur-intensité pendant la décharge de la batterie lors de l'utilisation de l'outil, ce ou ces modules sont situés à proximité de ladite batterie ; le troisième sous-ensemble (4) consiste au moins en une source d'alimentation électrique dont la tension et le courant sont adaptés à la recharge de la batterie lithium-ion ou lithium polymère (5), un module parmi le ou les modules électriques ou électroniques de gestion de la batterie équipant le deuxième sous-ensemble (3) ayant pour fonction la coupure automatique de l'alimentation électrique du premier sous-ensemble (2) lorsque la tension de la batterie a atteint un niveau bas minimum avant détérioration de la batterie lithium-ion ou lithium polymère équipant le deuxième sous-ensemble (3) par perte significative de capacité et augmentation de l'autodécharge et dans lequel :
le deuxième sous-ensemble (3) est pourvu d'un seul module (26) de gestion de la batterie qui est réalisé sous la forme d'une ou plusieurs cartes électroniques et qui comprend au moins une unité de traitement numérique (21), telle que par exemple un microprocesseur, microcontrôleur, un processeur de signaux numérique, associée à une mémoire et à des circuits annexes numérique ou analogiques,
lorsque l'ensemble outil électrique n'est pas en charge et qu'il n'a pas été utilisé pendant une durée donnée, par exemple dix jours, l'unité de traitement numérique (21) engage automatiquement une tâche de gestion de l'entreposage qui consiste à vérifier si la capacité résiduelle de la batterie (5) est supérieure ou non à la capacité de stockage préconisée par le fabricant d'éléments lithium-ion ou lithium polymère et, si la capacité résiduelle est bien supérieure à la capacité de stockage, à déclencher par l'unité de traitement numérique (21) une décharge automatique de la batterie à l'aide de circuits résistifs (31, 31') connectés en parallèle sur chaque cellule (8) et ce jusqu'à ce que la capacité de stockage soit atteinte, et dès lors à arrêter tous les circuits électroniques tout en mettant l'unité de traitement (21) en veille en mode faible consommation et, si la capacité est inférieure à la capacité de stockage, à faire déclencher par l'unité de traitement numérique (21) une alarme sonore et/ou visuelle.

2. Ensemble outil électrique selon la revendication 1, **caractérisé en ce que** le cordon souple (6) qui relie le premier sous-ensemble (2) au deuxième sous-ensemble (3) est pourvu d'un connecteur (24) du côté du premier sous-ensemble (3).

3. Ensemble outil électrique selon la revendication 1, **caractérisé en ce que** le cordon souple (6) qui relie le premier sous-ensemble (2) au deuxième sous-ensemble (3) est pourvu d'un connecteur (25) du côté du premier sous-ensemble (2)

4. Ensemble outil électrique selon la revendication 1, **caractérisé en ce que** le cordon souple (6) qui relie le premier sous-ensemble (2) au deuxième sous-ensemble (3) est pourvu d'un connecteur (25) du côté du premier sous-ensemble (2) et également d'un deuxième connecteur (24) du côté du deuxième sous-ensemble (3).

5. Ensemble outil électrique selon la revendication 1, **caractérisé en ce qu'**un module parmi le ou les modules électriques ou électroniques de gestion de la batterie équipant le deuxième sous-ensemble (3) a pour fonction la coupure automatique de la charge électrique de la batterie lorsque la tension délivrée par le troisième sous-ensemble chargeur (4) auquel il est relié a atteint une valeur maximum avant détérioration de la batterie lithium-ion ou lithium polymère équipant le deuxième sous-ensemble (30) par perte significative de capacité et augmentation de l'autodécharge.

6. Ensemble outil électrique selon la revendication 1, **caractérisé en ce qu'**un module parmi le ou les modules électriques ou électroniques de gestion de la batterie équipant le deuxième sous-ensemble (3) a pour fonction la coupure automatique de la charge électrique de la batterie lorsque le courant de charge de la batterie a atteint un niveau bas minimum préconisé ou imposé par le fabricant de la batterie lithium-ion ou lithium polymère équipant le deuxième sous-ensemble (3).

7. Ensemble outil électrique selon la revendication 1, **caractérisé en ce qu'**un module parmi le ou les modules électriques ou électroniques de gestion de la batterie équipant le deuxième sous-ensemble (3) a pour fonction la protection de la batterie contre les courts-circuits.

8. Ensemble outil électrique selon les revendications 1 et 7, **caractérisé en ce que** la fonction de protection de la batterie contre les courts circuits est réalisée par un fusible disposé au moins à l'une des bornes de la batterie du deuxième sous-ensemble (3).

9. Ensemble outil électrique selon les revendications 1 et 7, **caractérisé en ce que** la fonction de protection de la batterie contre les courts-circuits est réalisée par un disjoncteur ou un composant similaire disposé au moins à l'une des bornes de la batterie du deuxième sous-ensemble (3).

10. Ensemble outil électrique selon la revendication 1, **caractérisé en ce qu'**un module parmi le ou les modules électriques ou électroniques de gestion de la batterie équipant le deuxième sous-ensemble (3) a pour fonction la mise hors consommation ou très faible consommation de la batterie pendant la période de non-utilisation du premier sous-ensemble (2).

11. Ensemble outil électrique selon les revendications 1 ou 10, **caractérisé en ce que** la fonction de mise hors consommation ou très faible consommation de la batterie pendant la période de non-utilisation du premier sous-ensemble (2) est réalisée par un interrupteur disposé à l'une des bornes de la batterie et de préférence après le fusible ou le disjoncteur si ceux-ci sont installés.

12. Ensemble outil électrique selon la revendication 1, **caractérisé en ce que** le troisième sous-ensemble (4) est équipé d'un système de coupure automatique de la charge électrique de la batterie du deuxième sous-ensemble lorsque la tension de la batterie a atteint un niveau haut maximum avant dégradation de la batterie lithium-ion ou lithium polymère équipant le deuxième sous-ensemble (3).

13. Ensemble outil électrique selon la revendication 1, **caractérisé en ce que** le troisième sous-ensemble (4) peut être équipé d'un système de coupure automatique de la charge électrique du deuxième sous-ensemble lorsque le courant de charge de la batterie a atteint un niveau bas minimum préconisé ou imposé par le fabricant de la batterie équipant le deuxième sous-ensemble (3).

14. Ensemble outil électrique selon la revendication 1, **caractérisé en ce que** les éléments de la batterie lithium-ion du deuxième sous-ensemble sont au format commercial 18650.

15. Ensemble outil électrique selon la revendication 1, **caractérisé en ce que** le module de gestion de la batterie du second sous ensemble (3) est apte à remplir, une ou plusieurs des tâches suivantes :
la gestion de la charge,
la gestion de la décharge,
l'équilibrage de la charge de chaque cellule (8),
l'évaluation et l'affichage de la capacité de la batterie (5),
la protection en décharge de la batterie (5) en surintensité pendant l'utilisation de l'outil,
la gestion de l'outil durant les phases d'entreposage,
la gestion des alarmes,
la gestion et la transmission des informations recueillies,
la gestion des diagnostics.

16. Ensemble outil électrique selon les revendications 1 et 15, **caractérisé en ce que**, en vue de l'accomplissement des tâches de gestion de la charge, de gestion de la décharge, d'équilibrage de la charge de chaque cellule (8), d'évaluation et d'affichage de la capacité de la batterie (5), le module de gestion de la batterie exploite en permanence les valeurs de mesure de la tension de chaque cellule (8) composant la batterie (5).

17. Ensemble outil électrique selon les revendications 1, 15 et 16, **caractérisé en ce que**, pour une batterie (5) formée de n cellules (8) associées en série, les valeurs de mesure de la tension de chaque cellule (8) sont fournies par une chaîne électronique d'acquisition (27) constituée principalement de n modules analogiques (28) identiques, montés respectivement aux bornes des n cellules (8) de la batterie (5) et aptes à mesurer la tension de la cellule (8) respectivement correspondante, les valeurs de tensions mesurées par chacun des n modules (28) étant ensuite acheminées, l'une après l'autre, par l'intermédiaire d'au moins un multiplexeur analogique (29) et après amplification par un circuit adapté (30) vers un convertisseur analogique/numérique d'entrée (21') de l'unité de traitement numérique (21) du module de gestion de la batterie du deuxième sous-ensemble (3).

18. Ensemble outil électrique selon la revendication 17, **caractérisé en ce que** les modules analogiques (28) de mesure de tension réalisent respectivement pour chaque cellule (8) une soustraction entre la tension mesurée à sa borne positive et la tension mesurée à sa borne négative, ce par l'intermédiaire d'un montage électronique différentiel à amplificateur opérationnel (28') utilisant des résistances (28") ou des éléments résistifs d'entrée.

19. Ensemble outil électrique selon la revendication 18, **caractérisé en ce que** le montage électronique en différentiel à amplificateur opérationnel (28') de chaque module de mesure de tension (28) comporte des résistances ou des éléments résistifs d'entrée (28") d'impédance proche ou supérieure à 1 Mohm, de façon à obtenir des courants de fuite très faibles et par exemple inférieurs à 1/20 000^{ème} par heure de la capacité totale de la batterie (5).

20. Ensemble outil électrique selon les revendications 16 à 19, **caractérisé en ce que** les valeurs de mesure de la tension de chaque cellule (8) sont délivrées avec une précision de mesure d'au moins 50 mV.

21. Ensemble outil électrique selon la revendication 20, **caractérisé en ce que** la précision de mesure de la tension d'au moins 50 mV est obtenue par étalonnage lors de la fabrication de la carte électronique du module de gestion de la batterie (26).

22. Ensemble outil électrique selon la revendication 21, **caractérisé en ce que** l'étalonnage lors de la fabrication de la carte électronique consiste à introduire par programmation dans l'unité de traitement numérique (21), pour chaque module de mesure de tension (28), des paramètres correcteurs d'erreurs fonction de la mesure d'une ou de plusieurs tensions de référence très précises, que l'on substitue pour cette opération d'étalonnage aux tensions normalement mesurées aux bornes de chaque cellule (8).

23. Ensemble outil électrique selon la revendication 1 et l'une quelconque des revendications 15 à 22, **caractérisé en ce que** la tâche d'équilibrage de la charge des cellules (8) les unes par rapport aux autres est gérée par l'unité de traitement numérique (21) qui commande sur la base des valeurs de mesure de tension de chaque cellule (8), et si nécessaire pour chacune d'entre d'elles, l'évolution du courant de charge par l'intermédiaire de circuits dissipateurs à base de commutateurs électroniques (31) associés à des éléments résistifs (31').

24. Ensemble outil électrique selon la revendication 1 et l'une quelconque des revendications 15 à 23, **caractérisé en ce que** les tâches de gestion de la charge, d'évaluation et d'affichage de la capacité de la batterie (5) et de protection en surintensité durant la décharge sont gérées en continu par l'unité de traitement numérique (21) grâce à un circuit électronique analogique (33) de mesure du courant de charge et de décharge de la batterie (5).

25. Ensemble outil électrique selon la revendication 24, **caractérisé en ce que** durant la tâche de gestion de la charge, alors que le troisième sous-ensemble formant chargeur (4) est connecté au deuxième sous-ensemble (3) au niveau de la carte électronique du module de gestion (26) de la batterie (5), la fin de la charge est obtenue par ouverture d'un composant de commutation de la charge (34) qui est commandé par l'unité de traitement numérique (21) lorsque, d'une part, ladite unité (21) détecte par l'intermédiaire du circuit électronique analogique (33) de mesure du courant de charge et de décharge une chute du courant de charge jusqu'à un seuil préconisé, par exemple de 50 mA, pour la batterie (5) ou que, d'autre part, la température de la batterie (5) dépasse une valeur limite autorisée, par exemple 45°C, ou encore que la charge se prolonge pendant un temps supérieur à une fraction donnée du temps théorique de charge, par exemple environ 20 %.

26. Ensemble outil électrique selon la revendication 24, pour autant qu'elle se rattache la revendication 1 et à l'une des revendications 15 à 22, **caractérisé en ce que** la tâche d'évaluation et d'affichage de la capacité de la batterie (5) est gérée par l'unité de traitement numérique (21), cette dernière calculant ladite capacité en prenant en compte en permanence, pendant la charge et pendant l'utilisation de l'outil, d'une part, l'information du courant instantané de charge et de décharge de la batterie (5) délivrée par le circuit électronique analogique de mesure du courant de charge et décharge (33) et, d'autre part, les valeurs de mesure de tension de chaque cellule (8) et, non obligatoirement mais pour un calcul plus précis, leur résistance interne moyenne connue.

27. Ensemble outil électrique selon la revendication 1 et l'une quelconque des revendications 15 à 26, **caractérisé en ce que** la tâche de protection en surintensité pendant la décharge de la batterie (5) lors de l'utilisation de l'outil, destinée à préserver la batterie lithium-ion ou lithium polymère d'un vieillissement prématuré ou d'un échauffement exagéré, consiste soit à couper le courant de décharge en cas de dépassement impulsionnel très important du courant maximum de décharge admis pour la batterie (5) ou de dépassement de la température maximum limite autorisée pour celle-ci, soit à limiter le courant de décharge en fonction de l'énergie consommée par l'outil pendant un certain temps glissant, sachant que la valeur de l'énergie et le temps glissant sont prédéterminés expérimentalement en fonction de l'outil, de son utilisation et de la durée de vie recherchée
pour la batterie (5) lithium-ion ou lithium polymère faisant partie du second sous-ensemble (3).

28. Ensemble outil électrique selon la revendication 27, **caractérisé en ce que** la limitation de courant de décharge est gérée par l'unité (21) de traitement numérique en appliquant une commande en modulation de largeur d'impulsion (MLI), générée soit directement par ladite unité (21), soit par un composant spécialisé, au travers d'un étage de pilotage (35), à un composant de commutation de la décharge (32) réalisé par exemple sous la forme d'un composant du type Mosfet canal N.

29. Ensemble outil électrique selon la revendication 1 et l'une quelconque des revendications 15 à 28, **caractérisé en ce que** l'unité de traitement numérique (21) est apte à détecter la connexion du chargeur (4) sous tension à la batterie (5) par
l'intermédiaire d'une mesure de tension par le module de gestion (26) à l'une au moins des bornes (37) du deuxième sous-ensemble (3) destinées à être connectées audit chargeur (4).

30. Ensemble outil électrique selon la revendication 29, **caractérisé en ce que** la fonction de détection de la connexion du chargeur (4) sous tension à la batterie (5) est réalisée au moyen d'un circuit de mesure (36) particulier adapté, permettant, tant que l'outil est stocké en phase de non utilisation, en détectant l'instant auquel au moins une cellule (8) a atteint la tension minimum préconisée par le fabricant, de déclencher ainsi une recharge automatique de la batterie (5).

31. Ensemble outil électrique selon la revendication 29 ou 30, **caractérisé en ce que** lorsque le module de gestion (26) de la batterie détecte une tension du chargeur (4) excessive ou insuffisante au niveau des bornes de connexion (37) correspondantes du second sous-ensemble (3), l'unité de traitement numérique (21) qui exploite cette information commande l'arrêt de la charge et déclenche une alarme sonore et/ou visuelle.

32. Ensemble outil électrique selon la revendication 1 et l'une quelconque des revendications 15 à 31, **caractérisé en ce que** la tâche de gestion des informations et des diagnostics consiste à emmagasiner dans la mémoire de l'unité de traitement numérique (21) des informations acquises pendant l'utilisation de l'outil telles que par exemple : le nombre de recharges, la comptabilisation des heures d'utilisation de l'outil, l'évolution de la capacité de la batterie (5) dans le temps, l'énergie moyenne consommée par l'outil ou analogues, ces informations pouvant être transmises par l'intermédiaire d'une liaison (40) filaire, radiofréquence ou infrarouge, vers un terminal d'exploitation séparé, par exemple du type ordinateur personnel, assistant personnel électronique, GSM, pouvant éventuellement être relié au réseau Internet.

33. Ensemble outil électrique selon la revendication 1 et l'une quelconque des revendications 15 à 32, **caractérisé en ce que** le module de gestion de la batterie faisant partie du deuxième sous-ensemble (3) formant source d'énergie électrique rechargeable, est associé au module de contrôle et de commande électronique de l'actionneur (2) sur la même carte électronique, le cas échéant avec utilisation de la même unité de traitement numérique (21).

34. Ensemble outil électrique selon la revendication 1 et l'une quelconque des revendications 15 à 32, **caractérisé en ce que** le module de gestion de la batterie comporte, pour chaque cellule (8) des circuits redondants de sécurité d'arrêt de charge (38), aptes à commander chacun individuellement, en cas de surtension d'une cellule (8), l'arrêt général de la charge en désactivant directement un composant (34) de commutation de la charge sans solliciter l'unité de traitement numérique (21).

35. Ensemble outil électrique selon la revendication 24 ou l'une quelconque des revendications 25 à 34 pour autant qu'elle se rattache à la revendication 25, **caractérisé en ce que** le module de gestion de la batterie comporte un circuit redondant d'arrêt de décharge (38'), apte à commander l'arrêt de la décharge en cas de détection d'un courant de décharge égal ou supérieur à une valeur maximale admissible pour la batterie (5) par le circuit électronique analogique de mesure (33), en désactivant directement le composant (32) de commutation de la décharge sans solliciter l'unité de traitement numérique (21).

36. Ensemble outil électrique selon l'une quelconque des revendications 1 à 35 **caractérisé en ce que** le troisième sous-ensemble (4) formant chargeur adapté à la recharge de la batterie (5) lithium-ion ou lithium polymère génère une tension avec une précision proche de 0,5 % et un courant régulé, obtenus au moyen d'un circuit spécialisé de régulation de tension et de courant.

37. Ensemble outil électrique selon l'une quelconque des revendications 1 à 36, **caractérisé en ce que** chaque sous-ensemble fonctionnel (2, 3 et 4) est monté dans un boîtier de protection et/ou de préhension propre.

## Patentansprüche

1. Stromautonomer tragbarer Elektrowerkzeugsatz wie beispielsweise eine Gartenschere, eine Säge, ein Obstpflücker, ein Rasenmäher, eine Motorsense, eine Heckenschere, ein Schlagschrauber, ein Presslufthammer, umfassend mindestens drei verschiedene funktionelle Baugruppen, und zwar eine erste Baugruppe (2), welche die mechanische Wirkung des Werkzeugs über einen elektrischen Stellantrieb generiert, der mindestens während der Verwendung des Werkzeugs über ein flexibles Stromkabel (6) an eine zweite tragbare Baugruppe (3) abgeschlossen ist, welche die Stromquelle für den Werkzeugsatz darstellt und eine wiederaufladbare elektrochemische Batterie umfasst, sowie eine dritte Lade-Baugruppe (4), die während des Ladens elektrisch über ein flexibles, absteckbares Kabel (10) an die zweite Baugruppe angeschlossen ist und geeignet ist, elektrische Wiederaufladungen der elektrochemischen Batterie der zweiten Baugruppe durchzuführen, **dadurch gekennzeichnet, dass** die zweite Baugruppe (3) einerseits mit einer Lithium-Ionen- oder Lithium-Polymer-Batterie ausgestattet ist, die durch Verbinden von Zellen in Serie gebildet wird, wobei jede Zelle aus mehreren Elementen zusammengesetzt ist, wobei jedes Element ein individueller Akkumulator für elektrische Energie ist und wobei die Elemente parallel geschaltet verbunden sind, und andererseits mit einem oder mehreren elektrischen oder elektronischen Batteriemanagement-Modulen ausgestattet ist, die geeignet sind, die Aufgabe des Überstromschutzes der Batterie während des Entladens der Batterie bei der Verwendung des Werkzeugs zu erfüllen, wobei dieses Modul bzw. diese Module in der Nähe der Batterie gelegen ist bzw. sind; die dritte Baugruppe (4) besteht mindestens aus einer Stromversorgungsquelle, deren Spannung und Strom zum Wiederaufladen der Lithium-Ionen- oder Lithium-Polymer-Batterie (5) geeignet sind, wobei ein Modul unter dem oder den elektrischen oder elektronischen Batteriemanagement-Modulen, mit dem bzw. denen die zweite Baugruppe ausgestattet ist, die Funktion hat, die Stromversorgung der ersten Baugruppe (2) automatisch zu unterbrechen, wenn die Spannung der Batterie ein unteres Mindestniveau erreicht hat, bevor die Lithium-Ionen- oder Lithium-Polymer-Batterie, mit der die zweite Baugruppe ausgestattet ist, durch deutlichen Kapazitätsverlust und Zunahme der Selbstentladung beschädigt wird, und bei dem:
die zweite Baugruppe (3) mit einem einzigen Batteriemanagement-Modul (26) ausgestattet ist, das in Form einer oder mehrerer Leiterplatten ausgeführt ist und das mindestens eine digitale Verarbeitungseinheit (21), wie beispielsweise einen Mikroprozessor, einen Mikrocontroller oder einen digitalen Signalprozessor, in Verbindung mit einem Speicher und mit digitalen oder analogen Nebenschaltungen, umfasst,
die digitale Verarbeitungseinheit (21), wenn der Elektrowerkzeugsatz nicht unter Last steht und während einer gegebenen Dauer, beispielsweise zehn Tage, nicht verwendet wurde, automatisch eine Aufgabe der Verwaltung der Lagerung einleitet, die darin besteht zu prüfen, ob die Restkapazität der Batterie (5) über der vom Hersteller von Lithium-Ionen- oder Lithium-Polymer-Elementen empfohlenen Lagerkapazität liegt oder nicht, und, wenn die Restkapazität deutlich über der Lagerkapazität liegt, durch die digitale Verarbeitungseinheit (21) eine automatische Entladung der Batterie mithilfe von Widerstandsschaltungen (31, 31'), die parallel an jede Zelle (8) abgeschlossen sind, auszulösen, und dies, bis die Lagerkapazität erreicht ist, und daraufhin alle elektronischen Schaltungen abzuschalten und dabei die Bearbeitungseinheit (21) in einen Standby-Modus mit niedrigem Verbrauch zu versetzen, und, wenn die Kapazität unter der Lagerkapazität liegt, durch die digitale Verarbeitungseinheit (21) einen akustischen und/oder optischen Alarm auslösen zu lassen.

2. Elektrowerkzeugsatz nach Anspruch 1, **dadurch gekennzeichnet, dass** das flexible Kabel (6), das die erste Baugruppe (2) mit der zweiten Baugruppe (3) verbindet, auf der Seite der ersten Baugruppe (3) mit einem Steckverbinder (24) ausgestattet ist.

3. Elektrowerkzeugsatz nach Anspruch 1, **dadurch gekennzeichnet, dass** das flexible Kabel (6), das die erste Baugruppe (2) mit der zweiten Baugruppe (3) verbindet, auf der Seite der ersten Baugruppe (2) mit einem Steckverbinder (25) ausgestattet ist.

4. Elektrowerkzeugsatz nach Anspruch 1, **dadurch gekennzeichnet, dass** das flexible Kabel (6), das die erste Baugruppe (2) mit der zweiten Baugruppe (3) verbindet, auf der Seite der ersten Baugruppe (2) mit einem Steckverbinder (25) und auch auf der Seite der zweiten Baugruppe (3) mit einem zweiten Steckverbinder (24) ausgestattet ist.

5. Elektrowerkzeugsatz nach Anspruch 1, **dadurch gekennzeichnet, dass** ein Modul unter dem oder den elektrischen oder elektronischen Batteriemanagement-Modulen, mit dem bzw. denen die zweite Baugruppe (3) ausgestattet ist, die Funktion hat, den Ladevorgang der Batterie automatisch zu unterbrechen, wenn die von der dritten Lade-Baugruppe (4), mit der sie verbunden ist, gelieferte Spannung einen Höchstwert erreicht hat, bevor die Lithium-Ionen- oder Lithium-Polymer-Batterie, mit der die zweite Baugruppe (30) ausgestattet ist, durch deutlichen Kapazitätsverlust und Zunahme der Selbstentladung beschädigt wird.

6. Elektrowerkzeugsatz nach Anspruch 1, **dadurch gekennzeichnet, dass** ein Modul unter dem oder den elektrischen oder elektronischen Batteriemanagement-Modulen, mit dem bzw. denen die zweite Baugruppe (3) ausgestattet ist, die Funktion hat, den Ladevorgang der Batterie automatisch zu unterbrechen, wenn der Ladestrom der Batterie ein unteres Mindestniveau erreicht hat, das vom Hersteller der Lithium-Ionen- oder Lithium-Polymer-Batterie, mit der die zweite Baugruppe (3) ausgestattet ist, empfohlen oder vorgeschrieben wird.

7. Elektrowerkzeugsatz nach Anspruch 1, **dadurch gekennzeichnet, dass** ein Modul unter dem oder den elektrischen oder elektronischen Batteriemanagement-Modulen, mit dem bzw. denen die zweite Baugruppe (3) ausgestattet ist, die Funktion hat, die Batterie vor Kurzschlüssen zu schützen.

8. Elektrowerkzeugsatz nach den Ansprühen 1 und 7, **dadurch gekennzeichnet, dass** die Funktion des Schutzes der Batterie vor Kurzschlüssen durch eine Sicherung ausgeführt wird, die mindestens an einem der Klemmen der Batterie der zweiten Baugruppe (3) angeordnet ist.

9. Elektrowerkzeugsatz nach den Ansprüchen 1 und 7, **dadurch gekennzeichnet, dass** die Funktion des Schutzes der Batterie vor Kurzschlüssen durch einen Fehlerstromschutzschalter oder eine ähnliche Komponente ausgeführt wird, der bzw. die mindestens an einem der Klemmen der Batterie der zweiten Baugruppe (3) angeordnet ist.

10. Elektrowerkzeugsatz nach Anspruch 1, **dadurch gekennzeichnet, dass** ein Modul unter dem oder den elektrischen oder elektronischen Batteriemanagement-Modulen, mit dem bzw. denen die zweite Baugruppe (3) ausgestattet ist, die Funktion hat, den Verbrauch der Batterie während des Nichtverwendungszeitraums der ersten Baugruppe (2) zu unterbinden oder sehr gering zu halten.

11. Elektrowerkzeugsatz nach den Ansprüchen 1 oder 10, **dadurch gekennzeichnet, dass** die Funktion der Unterbindung des Verbrauchs oder der Sicherstellung eines sehr geringen Verbrauchs der Batterie während des Nichtverwendungszeitraums der ersten Baugruppe (2) durch einen Schalter ausgeführt wird, der an einer der Klemmen der Batterie und bevorzugt hinter der Sicherung oder dem Fehlerstromschutzschalter, falls diese installiert sind, angeordnet ist.

12. Elektrowerkzeugsatz nach Anspruch 1, **dadurch gekennzeichnet, dass** die dritte Baugruppe (4) mit einem System zur automatischen Unterbrechung des Ladevorgangs der Batterie der zweiten Baugruppe ausgestattet ist, wenn die Spannung der Batterie ein oberes Höchstniveau erreicht hat, bevor die Lithium-Ionen- oder Lithium-Polymer-Batterie, mit der die zweite Baugruppe (3) ausgestattet ist, beschädigt wird.

13. Elektrowerkzeugsatz nach Anspruch 1, **dadurch gekennzeichnet, dass** die dritte Baugruppe (4) mit einem System zur automatischen Unterbrechung des Ladevorgangs der zweiten Baugruppe ausgestattet sein kann, wenn der Ladestrom der Batterie ein unteres Mindestniveau erreicht hat, das vom Hersteller der Batterie, mit der die zweite Baugruppe (3) ausgestattet ist, empfohlen oder vorgeschrieben wird.

14. Elektrowerkzeugsatz nach Anspruch 1, **dadurch gekennzeichnet, dass** die Elemente der Lithium-Ionen-Batterie der zweiten Baugruppe von der Größe 18650 sind.

15. Elektrowerkzeugsatz nach Anspruch 1, **dadurch gekennzeichnet, dass** das Batteriemanagement-Modul der zweiten Baugruppe (3) geeignet ist, eine oder mehrere der folgenden Aufgaben zu erfüllen:
- Lademanagement,
- Entlademanagement,
- Ladungsausgleich jeder Zelle (8),
- Bewertung und Anzeige der Kapazität der Batterie (5),
- Überstromschutz der Batterie (5) beim Entladen während der Verwendung des Werkzeugs,
- Verwaltung des Werkzeugs während der Lagerungsphasen,
- Alarmverwaltung,
- Verwaltung und Übertragung der gesammelten Informationen,
- Diagnoseverwaltung.

16. Elektrowerkzeugsatz nach den Ansprüchen 1 und 15, **dadurch gekennzeichnet, dass** das Batteriemanagement-Modul im Hinblick auf die Erfüllung der Aufgaben des Lademanagements, des Entlademanagements, des Ladungsausgleichs jeder Zelle (8), der Bewertung und Anzeige der Kapazität der Batterie (5) ständig die Messwerte der Spannung jeder Zelle (8), aus denen die Batterie (5) besteht, auswertet.

17. Elektrowerkzeugsatz nach den Ansprüchen 1, 15 und 16, **dadurch gekennzeichnet, dass** bei einer Batterie (5), die aus n in Serie verbundenen Zellen (8) gebildet wird, die Messwerte der Spannung jeder Zelle (8) von einer elektronischen Erfassungskette (27) geliefert werden, die hauptsächlich aus n identischen analogen Modulen (28) besteht, die jeweils an den Klemmen der n Zellen (8) der Batterie (5) montiert sind und geeignet sind, die Spannung der jeweils entsprechenden Zelle (8) zu messen, wobei die von jedem der n Module (28) gemessenen Spannungswerte anschließend nacheinander über mindestens einen analogen Multiplexer (29) und nach Verstärkung durch eine angepasste Schaltung (30) zu einem Analog-Digital-Eingangswandler (21') der digitalen Verarbeitungseinheit (21) des Batteriemanagement-Moduls der zweiten Baugruppe (3) übertragen werden.

18. Elektrowerkzeugsatz nach Anspruch 17, **dadurch gekennzeichnet, dass** die analogen Module (28) zur Spannungsmessung jeweils für jede Zelle (8) eine Subtraktion zwischen der an ihrer positiven Klemme gemessenen Spannung und der an ihrer negativen Klemme gemessenen Spannung ausführen, und zwar über eine elektronische Differentialschaltung mit Operationsverstärker (28'), der Widerstände (28") oder resistive Eingangselemente verwendet.

19. Elektrowerkzeugsatz nach Anspruch 18, **dadurch gekennzeichnet, dass** die elektronische Differentialschaltung mit Operationsverstärker (28') jedes Spannungsmessmoduls (28) Widerstände oder resistive Eingangselemente (28") mit einer Impedanz nahe oder über 1 MOhm umfasst, so dass sehr geringe Leckströme erhalten werden, die beispielsweise geringer als 1/20.000 pro Stunde der Gesamtkapazität der Batterie (5) sind.

20. Elektrowerkzeugsatz nach den Ansprüchen 16 bis 19, **dadurch gekennzeichnet, dass** die Messwerte der Spannung jeder Zelle (8) mit einer Messgenauigkeit von mindestens 50 mV geliefert werden.

21. Elektrowerkzeugsatz nach Anspruch 20, **dadurch gekennzeichnet, dass** die Messgenauigkeit der Spannung von mindestens 50 mV durch Kalibrierung bei der Herstellung der Leiterplatte des Batteriemanagement-Moduls (26) erhalten wird.

22. Elektrowerkzeugsatz nach Anspruch 21, **dadurch gekennzeichnet, dass** die Kalibrierung bei der Herstellung der Leiterplatte darin besteht, durch Programmierung in die digitale Verarbeitungseinheit (21) für jedes Spannungsmessmodul (28) Fehlerkorrekturparameter einzugeben, die von der Messung einer oder mehrerer sehr genauer Referenzspannungen abhängig sind, mit der bzw. denen man für diesen Kalibriervorgang die normalerweise an den Klemmen jeder Zelle (8) gemessenen Spannungen ersetzt.

23. Elektrowerkzeugsatz nach Anspruch 1 und einem der Ansprüche 15 bis 22, **dadurch gekennzeichnet, dass** die Aufgabe des Ladungsausgleichs der Zellen (8) untereinander von der digitalen Verarbeitungseinheit (21) verwaltet wird, die auf der Grundlage der Spannungsmesswerte jeder Zelle (8), und, falls nötig, für jede von ihnen, die Entwicklung des Ladestroms über Ableitungsschaltungen auf der Grundlage von elektronischen Schaltern (31), die resistiven Elementen (31') zugeordnet sind, steuert.

24. Elektrowerkzeugsatz nach Anspruch 1 und einem der Ansprüche 15 bis 23, **dadurch gekennzeichnet, dass** die Aufgaben des Lademanagements, der Bewertung und Anzeige der Kapazität der Batterie (5) und des Überstromschutzes während des Entladens von der digitalen Verarbeitungseinheit (21) kontinuierlich dank einer analogen elektronischen Schaltung (33) zur Messung des Lade- und Entladestroms der Batterie (5) verwaltet werden.

25. Elektrowerkzeugsatz nach Anspruch 24, **dadurch gekennzeichnet, dass** während der Aufgabe des Lademanagements, wenn die das Ladegerät (4) bildende dritte Baugruppe an die zweite Baugruppe (3) auf Ebene der Leiterplatte des Managementmoduls (26) der Batterie (5) angeschlossen ist, das Ende des Ladens durch Öffnen einer Ladeschaltkomponente (34) erhalten wird, die von der digitalen Verarbeitungseinheit (21) gesteuert wird, wenn zum einen die Einheit (21) über die analoge elektronische Schaltung (33) zur Messung des Lade- und Entladestroms einen Abfall des Ladestroms bis auf einen empfohlenen Schwellenwert, beispielsweise 50 mA, für die Batterie (5) detektiert oder zum anderen die Temperatur der Batterie (5) einen zulässigen Grenzwert, beispielsweise 45 °C, überschreitet, oder auch das Laden sich während einer Zeit fortsetzt, die größer als ein gegebener Bruchteil der theoretischen Ladezeit ist, beispielsweise circa 20 %.

26. Elektrowerkzeugsatz nach Anspruch 24, sofern dieser mit Anspruch 1 und einem der Ansprüche 15 bis 22 zusammenhängt, **dadurch gekennzeichnet, dass** die Aufgabe der Bewertung und Anzeige der Kapazität der Batterie (5) von der digitalen Verarbeitungseinheit (21) verwaltet wird, wobei Letztere die Kapazität berechnet, indem sie ständig, während des Ladens und während der Verwendung des Werkzeugs, zum einen die Information des momentanen Lade- und Entladestroms der Batterie (5), die von der analogen elektronischen Schaltung (33) zur Messung des Lade- und Entladestroms geliefert wird, und zum anderen die Spannungsmesswerte jeder Zelle (8) und, nicht unbedingt, aber für eine genauere Berechnung, ihren bekannten durchschnittlichen Innenwiderstand berücksichtigt.

27. Elektrowerkzeugsatz nach Anspruch 1 und einem der Ansprüche 15 bis 26, **dadurch gekennzeichnet, dass** die Aufgabe des Überstromschutzes während des Entladens der Batterie (5) bei der Verwendung des Werkzeugs, der dazu dient, die Lithium-Ionen- oder Lithium-Polymer-Batterie vor einer vorzeitigen Alterung oder einer übermäßigen Erwärmung zu schützen, darin besteht, entweder den Entladestrom bei einer sehr deutlichen impulsartigen Überschreitung des für die Batterie (5) zulässigen maximalen Entladestroms oder bei einer Überschreitung der für diese zulässigen maximalen Grenztemperatur zu unterbrechen oder den Entladestrom in Abhängigkeit von der vom Werkzeug während eines bestimmten gleitenden Zeitraums verbrauchten Energie zu begrenzen, wobei der Wert der Energie und der gleitende Zeitraum in Abhängigkeit vom Werkzeug, von seiner Verwendung und von der für die Lithium-Ionen- oder Lithium-Polymer-Batterie (5), die Bestandteil der zweiten Baugruppe (3) ist, angestrebten Lebensdauer experimentell vorherbestimmt werden.

28. Elektrowerkzeugsatz nach Anspruch 27, **dadurch gekennzeichnet, dass** die Entladestrombegrenzung von der digitalen Verarbeitungseinheit (21) verwaltet wird, indem ein Pulsweitenmodulationsbefehl (PWM-Befehl), der entweder direkt von der Einheit (21) oder von einer spezialisierten Komponente erzeugt wird, über eine Ansteuerungsstufe (35) auf eine Entladeschaltkomponente (32) angewandt wird, die beispielsweise in Form einer Komponente vom Typ n-Kanal-MOSFET ausgeführt ist.

29. Elektrowerkzeugsatz nach Anspruch 1 und einem der Ansprüche 15 bis 28, **dadurch gekennzeichnet, dass** die digitale Verarbeitungseinheit (21) geeignet ist, das Anschließen des Ladegeräts (4) unter Spannung an die Batterie (5) über eine Spannungsmessung durch das Management-Modul (26) an mindestens einer der Klemmen (37) der zweiten Baugruppe (3), die dazu bestimmt sind, an das Ladegerät (4) angeschlossen zu werden, zu detektieren.

30. Elektrowerkzeugsatz nach Anspruch 29, **dadurch gekennzeichnet, dass** die Funktion der Detektion des Anschließens des Ladegeräts (4) unter Spannung an die Batterie (5) mittels einer angepassten besonderen Messschaltung (36) ausgeführt wird, die es ermöglicht, solange das Werkzeug in der Nichtverwendungsphase gelagert wird, indem sie den Zeitpunkt detektiert, zu dem mindestens eine Zelle (8) die vom Hersteller empfohlene Mindestspannung erreicht hat, ein automatisches Wiederaufladen der Batterie (5) auszulösen.

31. Elektrowerkzeugsatz nach Anspruch 29 oder 30, **dadurch gekennzeichnet, dass**, wenn das Batteriemanagement-Modul (26) eine übermäßige oder unzureichende Spannung des Ladegeräts (4) an den entsprechenden Anschlussklemmen (37) der zweiten Baugruppe (3) detektiert, die digitale Verarbeitungseinheit (21), die diese Information auswertet, das Abbrechen des Ladens steuert und einen akustischen und/oder optischen Alarm auslöst.

32. Elektrowerkzeugsatz nach Anspruch 1 und einem der Ansprüche 15 bis 31, **dadurch gekennzeichnet, dass** die Aufgabe der Informations- und Diagnoseverwaltung darin besteht, in dem Speicher der digitalen Verarbeitungseinheit (21) während der Verwendung des Werkzeugs erfasste Informationen zu speichern wie beispielsweise: die Anzahl der Wiederaufladungen, die Betriebsstunden des Werkzeugs, die Entwicklung der Kapazität der Batterie (5) im Zeitverlauf, der mittlere Energieverbrauch des Werkzeugs oder ähnliche Daten, wobei diese Informationen über eine drahtgebundene, Funk- oder Infrarot-Verbindung (40) an ein gesondertes Auswertungsterminal beispielsweise vom Typ PC, PDA oder GSM, das eventuell an das Internet angeschlossen sein kann, übertragen werden können.

33. Elektrowerkzeugsatz nach Anspruch 1 und einem der Ansprüche 15 bis 32, **dadurch gekennzeichnet, dass** das Batteriemanagement-Modul, das Teil der zweiten Baugruppe (3) ist, welche die wiederaufladbare Stromquelle bildet, dem elektronischen Schalt- und Steuerungsmodul des Stellantriebs (2) auf derselben Leiterplatte zugeordnet ist, gegebenenfalls unter Verwendung derselben digitalen Verarbeitungseinheit (21).

34. Elektrowerkzeugsatz nach Anspruch 1 und einem der Ansprüche 15 bis 32, **dadurch gekennzeichnet, dass** das Batteriemanagement-Modul für jede Zelle (8) redundante Ladeabbruch-Sicherheitsschaltungen (38) umfasst, die geeignet sind, im Fall einer Überspannung einer Zelle (8) jeweils einzeln das allgemeine Abbrechen des Ladens zu steuern, indem sie eine Ladeschaltkomponente (34) direkt deaktiviert, ohne die digitale Verarbeitungseinheit (21) zu beanspruchen.

35. Elektrowerkzeugsatz nach Anspruch 24 oder einem der Ansprüche 25 bis 34, insofern dieser mit Anspruch 25 zusammenhängt, **dadurch gekennzeichnet, dass** das Batteriemanagement-Modul eine redundante Entladeabbruchschaltung (38') umfasst, die geeignet ist, im Fall der Detektion eines Entladestroms größer oder gleich einem für die Batterie (5) zulässigen Höchstwert durch die analoge elektronische Messschaltung (33) das Abbrechen des Entladens zu steuern, indem sie die Entladeschaltkomponente (32) direkt deaktiviert, ohne die digitale Verarbeitungseinheit (21) zu beanspruchen.

36. Elektrowerkzeugsatz nach einem der Ansprüche 1 bis 35, **dadurch gekennzeichnet, dass** die dritte Baugruppe (4), die das zum Wiederaufladen der Lithium-Ionen- oder Lithium-Polymer-Batterie (5) angepasste Ladegerät bildet, eine Spannung mit einer Genauigkeit nahe 0,5 % und einen geregelten Strom erzeugt, die mittels einer spezialisierten Spannungs- und Stromregelungsschaltung erhalten werden.

37. Elektrowerkzeugsatz nach einem der Ansprüche 1 bis 36, **dadurch gekennzeichnet, dass** jede funktionelle Baugruppe (2, 3 und 4) in einem eigenen Schutz- und/oder Handlinggehäuse montiert ist.

## Claims

1. Portable self-contained electric power tool unit such as shears, a saw, a fruit-gathering tool, lawnmowers, a brush cutter, a hedge trimmer, an impact wrench or a jack hammer, comprising at least three separate functional subassemblies, namely a first subunit (2) producing the mechanical action of the tool by means of an electrical actuator connected, at least while the tool is being used, by a flexible electrical cord (6), to a second portable subunit (3) constituting the source electrical energy source of the unit and comprising a rechargeable electrochemical battery, a third charging subunit (4) connected electrically, during charging, by a flexible disconnectable cord (10), to the second subunit and able to provide electrical recharging of the electrochemical battery of the second subunit, **characterized in that** the second subunit (3) is provided, on the one hand, with a lithium-ion or lithium-polymer battery formed by connecting cells in series, each cell being composed of several elements, each element being an individual electrical energy accumulator, and the elements being connected in parallel and, on the other hand, with one or several electrical or electronic control modules for the battery which are capable of completing the task of protecting the battery in an overcurrent situation when the battery is discharging while the tool is being used, wherein this or these modules are situated near to said battery; the third subunit (4) consists at least of one electrical supply source, the voltage and current of which are able to recharge the lithium-ion or lithium polymer battery (5), one module from amongst the one or more electrical or electronic control modules for the battery fitted in the second subunit (3) has the function of automatically cutting off the electrical supply of the first subunit (2) when the voltage of the battery has reached a minimum low level before the deterioration of the lithium-ion or lithium polymer battery fitted in the second subunit (3) by a significant loss of capacity and increased self-discharge, and wherein:
the second subunit (3) is provided with a single control module (26) for the battery which is produced in the form of one or several electronic boards and which comprises at least one digital processing unit (21), such as, for example, a microprocessor, microcontroller or a digital signal processor, connected to a memory and to peripheral digital or analogue circuits,
when the electrical tool unit is not charging and it has not been used for a given duration, for example ten days, the digital processing unit (21) automatically embarks upon a storage control task which consists in checking whether or not the residual capacity of the battery (5) is greater than the storage capacity recommended by the manufacturer of lithium-ion or lithium polymer elements and, if the residual capacity is indeed greater than the storage capacity, in triggering, by means of the digital processing unit (21), automatic discharging of the battery using resistive circuits (31, 31') connected in parallel on each cell (8), until the storage capacity is reached, and then in stopping all the electronic circuits while at the same time putting the processing unit (21) on standby in low-power mode and, if the capacity is lower than the storage capacity, in triggering, by means of the digital processing unit (21), a visual and/or audio alarm.

2. Electric tool unit according to Claim 1, **characterized in that** the flexible cord (6) which connects the first subunit (2) to the second subunit (3) is provided with a connector (24) on the first subunit (3) side.

3. Electric tool unit according to Claim 1, **characterized in that** the flexible cord (6) which connects the first subunit (2) to the second subunit (3) is provided with a connector (25) on the first subunit (2) side.

4. Electric tool unit according to Claim 1, **characterized in that** the flexible cord (6) which connects the first subunit (2) to the second subunit (3) is provided with a connector (25) on the first subunit (2) side and also with a second connector (24) on the second subunit (3) side.

5. Electric tool unit according to Claim 1, **characterized in that** one module from amongst the one or more electrical or electronic control modules for the battery fitted in the second subunit (3) has the function of automatically cutting off the electrical charging of the battery when the voltage supplied by the third charger subunit (4) to which it is connected has reached a maximum value before the deterioration of the lithium-ion or lithium polymer battery fitted in the second subunit (30) by a significant loss of capacity and increased self-discharge.

6. Electric tool unit according to Claim 1, **characterized in that** one module from amongst the one or more electrical or electronic control modules for the battery fitted in the second subunit (3) has the function of automatically cutting off the electrical charging of the battery when the charging current for the battery has reached a minimum low level recommended or required by the manufacturer of the lithium-ion or lithium polymer battery fitted in the second subunit (3).

7. Electric tool unit according to Claim 1, **characterized in that** one module from amongst the one or more electrical or electronic control modules for the battery fitted in the second subunit (3) has the function of protecting the battery from short circuits.

8. Electric tool unit according to Claims 1 and 7, **characterized in that** the function of protecting the battery from short circuits is performed by a fuse disposed at least at one of the terminals of the battery of the second subunit (3).

9. Electric tool unit according to Claims 1 and 7, **characterized in that** the function of protecting the battery from short circuits is performed by a circuit breaker or similar component disposed at least at one of the terminals of the battery of the second subunit (3).

10. Electric tool unit according to Claim 1, **characterized in that** one module from amongst the one or more electrical or electronic control modules for the battery fitted in the second subunit (3) has the function of cutting off the energy consumption of the battery or reducing it to a very low level while the first subunit (2) is not being used.

11. Electric tool unit according to Claim 1 or 10, **characterized in that** the function of cutting off the energy consumption of the battery or reducing it to a very low level while the first subunit (2) is not being used is performed by a switch disposed at one of the terminals of the battery and preferably after the fuse or the circuit breaker if these are installed.

12. Electric tool unit according to Claim 1, **characterized in that** the third subunit (4) is fitted with a system for automatically cutting off the electrical charging of the battery of the second subunit when the voltage of the battery has reached a maximum high level before degradation of the lithium-ion or lithium polymer battery fitted in the second subunit (3).

13. Electric tool unit according to Claim 1, **characterized in that** the third subunit (4) can be fitted with a system for automatically cutting off the electrical charging of the second subunit when the charging current for the battery has reached a minimum low level recommended or required by the manufacturer of the battery fitted in the second subunit (3).

14. Electric tool unit according to Claim 1, **characterized in that** the elements of the lithium-ion battery of the second subunit are in the 18650 commercial format.

15. Electric tool unit according to Claim 1, **characterized in that** the control module for the battery of the second subunit (3) is able to complete one or several of the following tasks:
controlling charging,
controlling discharging,
balancing the charging of each cell (8),
evaluating and displaying the capacity of the battery (5) ,
protecting the battery (5) when it discharges in an overcurrent situation while the tool is being used,
controlling the tool during storage periods,
controlling alarms,
controlling and transmitting gathered information,
controlling diagnostics.

16. Electric tool unit according to Claims 1 and 15, **characterized in that**, in order to carry out the tasks of controlling charging, controlling discharging, balancing the charging of each cell (8) and evaluating and displaying the capacity of the battery (5), the control module for the battery continuously uses the measured values of the voltage of each cell (8) making up the battery (5).

17. Electric tool unit according to Claims 1, 15 and 16, **characterized in that**, for a battery (5) formed by n cells (8) connected in series, the measured values of the voltage of each cell (8) are provided by an electronic acquisition chain (27) mainly consisting of n identical analogue modules (28) mounted respectively at the terminals of the n cells (8) of the battery (5) and capable of measuring the voltage of the respective corresponding cell (8), the voltage values measured by each of the n modules (28) being then forwarded, one after the other, by means of at least one analogue multiplexer (29) and after amplification by a suitable circuit (30) to an analogue-to-digital input converter (21') of the digital processing unit (21) of the control module for the battery of the second subunit (3).

18. Electric tool unit according to Claim 17, **characterized in that** the analogue voltage measurement modules (28) perform, for each cell (8) respectively, a subtraction between the voltage measured at its positive terminal and the voltage measured at its negative terminal, carried out by means of an electronic differential operational amplifier assembly (28') using resistors (28") or resistive input elements.

19. Electric tool unit according to Claim 18, **characterized in that** the electronic differential operational amplifier assembly (28') of each voltage measurement module (28) comprises resistors or resistive input elements (28'') with an impedance close to or greater than 1 Mohm in order to obtain very weak leakage currents which are, for example, less than 1/20,000th per hour of the total capacity of the battery (5).

20. Electric tool unit according to Claims 16 to 19, **characterized in that** the measured values of the voltage of each cell (8) are supplied to a measurement precision of at least 50 mV.

21. Electric tool unit according to Claim 20, **characterized in that** the precision of the measurement of the voltage of at least 50 mV is obtained by calibration at the time of manufacture of the electronic board of the control module (26) for the battery.

22. Electric tool unit according to Claim 21, **characterized in that** the calibration at the time of manufacture of the electronic board consists in using programming to enter into the digital processing unit (21), for each voltage measurement module (28), error correction parameters as a function of the measurement of one or several very precise reference voltages which are substituted for this calibration operation for the voltages normally measured at the terminals of each cell (8) .

23. Electric tool unit according to Claim 1 and any one of Claims 15 to 22, **characterized in that** the task of balancing the charging of the cells (8), each in relation to the others, is controlled by the digital processing unit (21) whose commands are based on the measured voltage values for each cell (8), and, if necessary for each of them, the change in the charging current by means of dissipative circuits based on electronic switches (31) connected to resistive elements (31').

24. Electric tool unit according to Claim 1 and any one of Claims 15 to 23, **characterized in that** the tasks of controlling the charging, of evaluating and displaying the capacity of the battery (5) and of protecting against overcurrent during discharging are controlled continuously by the digital processing unit (21) due to an electronic analogue circuit (33) for measuring the charging and discharging current for the battery (5).

25. Electric tool unit according to Claim 24, **characterized in that**, during the task of controlling the charging, whereas the third subunit forming the charger (4) is connected to the second subunit (3) at the electronic board of the control module (26) for the battery (5), the end of the charging is obtained by opening a component (34) for switching the charging which is controlled by the digital processing unit (21) when, on the one hand, said unit (21) detects, by means of the electronic analogue circuit (33) for measuring the charging and discharging current, a fall in the charging current as far as a recommended threshold, for example 50 mA, for the battery (5) or that, on the other hand, the temperature of the battery (5) passes a permitted limit value, for example 45°C, or indeed that the charging is lasting for a time which is greater than a given fraction of the theoretical charging time, such as about 20%.

26. Electric tool unit according to Claim 24, in so far as it is dependent on Claim 1 and any one of Claims 15 to 22, **characterized in that** the task of evaluating and displaying the capacity of the battery (5) is controlled by the digital processing unit (21), this latter calculating said capacity, continuously taking into account, during charging and while the tool is being used, on the one hand, information about the instantaneous charging and discharging current for the battery (5) provided by the electronic analogue circuit (33) for measuring the charging and discharging current and, on the other hand, the measured voltage values for each cell (8) and their known average internal resistance, which is not necessary but results in a more precise calculation.

27. Electric tool unit according to Claim 1 and any one of Claims 15 to 26, **characterized in that** the task of protecting against overcurrent when the battery (5) is discharging while the tool is being used, which is intended to prevent the premature aging or overheating of the lithium-ion or lithium polymer battery, consists either in cutting off the discharging current in the event of a very severe impulsive overshooting of the maximum discharging current allowed for the battery (5) or overshooting of the maximum temperature limit allowed for it, or in limiting the discharging current based on the energy consumed by the tool during a certain sliding time window, given that the value of the energy and the sliding time window are predetermined experimentally based on the tool, its use and the desired lifetime for the lithium-ion or lithium polymer battery (5) forming a part of the second subunit (3).

28. Electric tool unit according to Claim 27, **characterized in that** the limitation of the discharging current is controlled by the digital processing unit (21) by implementing a pulse width modulation (PWM) command, generated either directly by said unit (21) or by a specialized component, through a piloting stage (35), to a discharging switching component (32) produced, for example, in the form of an n-channel MOSFET component.

29. Electric tool unit according to Claim 1 and any one of Claims 15 to 28, **characterized in that** the digital processing unit (21) is able to detect the connection of the live charger (4) to the battery (5) by means of a voltage measurement by the control module (26) at at least one of the terminals (37) of the second subunit (3) which are intended to be connected to said charger (4).

30. Electric tool unit according to Claim 29, **characterized in that** the function of detecting the connection of the live charger (4) to the battery (5) is performed by means of a particular suitable measurement circuit (36), allowing, provided that the tool is stored in an unused phase, while detecting the instant at which at least one cell (8) has reached the minimum voltage recommended by the manufacturer, automatic recharging of the battery (5) to be triggered automatically.

31. Electric tool unit according to Claim 29 or 30, **characterized in that**, when the control module (26) for the battery detects an excessive or insufficient voltage of the charger (4) at the corresponding connection terminals (37) of the second subunit (3), the digital processing unit (21) which uses this information issues a command to stop the charging and triggers an audio and/or visual alarm.

32. Electric tool unit according to Claim 1 and any one of Claims 15 to 31, **characterized in that** the task of controlling information and diagnostics consists in storing, in the memory of the digital processing unit (21), information acquired while the tool is being used, such as, for example: the number of recharges, the record of the hours the tool is used, the change in the capacity of the battery (5) over time, the average energy consumed by the tool or similar, this information being able to be transmitted by means of a wired, radiofrequency or infrared link (40) to a separate use terminal, for example a personal computer, personal electronic assistant or GSM, which is possibly connected to the Internet.

33. Electric tool unit according to Claim 1 and any one of Claims 15 to 32, **characterized in that** the control module for the battery forming part of the second subunit (3) forming the rechargeable electrical energy source is connected to the electronic control and command module of the actuator (2) on the same electronic board, if necessary using the same digital processing unit (21).

34. Electric tool unit according to Claim 1 and any one of Claims 15 to 32, **characterized in that** the control module for the battery comprises, for each cell (8), redundant safety circuits (38) for stopping the charging which are able to each individually issue a command, in the event there is an overcurrent in one cell (8), to completely stop the charging by directly deactivating a component (34) for switching the charging without using the digital processing unit (21).

35. Electric tool unit according to Claim 24 or any one of Claims 25 to 34 in so far as it is dependent on Claim 25, **characterized in that** the control module for the battery comprises a redundant circuit (38') for stopping the discharging, which is able to issue a command to stop the discharging in the event that a discharge current that is equal to or higher than a maximum permissible value for the battery (5) is detected by the electronic analogue measurement circuit (33), by directly deactivating the component (32) for switching the discharging without using the digital processing unit (21) .

36. Electric tool unit according to any one of Claims 1 to 35, **characterized in that** the third subunit (4) forming the charger able to recharge the lithium-ion or lithium polymer battery (5) generates a voltage with a precision approaching 0.5% and a regulated current, which are obtained by means of a specialized voltage and current regulation circuit.

37. Electric tool unit according to any one of Claims 1 to 36, **characterized in that** each functional subunit (2, 3 and 4) is mounted in its own protective and/or holding box.
